# EUROPEAN PATENT APPLICATION

(11) **EP 4 510 714 A1**
(43) Date of publication of application: **19.02.2025**
(21) Application number: 23802745.2
(22) Date of filing: 05.05.2023
(51) Int. Cl.: H04W 52/02

(54) **COMMUNICATION METHOD AND APPARATUS**

(30) Priority: 11.05.2022 CN 202210513569; 19.07.2022 CN 202210849322
(71) Applicant: Huawei Technologies Co., Ltd., Shenzhen, Guangdong 518129 (CN)
(72) Inventor: DOU, Fenghui, Shenzhen, Guangdong 518129 (CN)
(74) Representative: Körber, Martin Hans
(86) International application number: PCT/CN2023/092176
(87) International publication number: WO 2023/216973

(57) **Abstract**

This application provides a communication method and apparatus. The method includes: First user equipment receives first request information sent by second user equipment. The first request information is used to request the first user equipment to receive information sent by a second network for paging the second user equipment. In response to receiving the information sent by the second network for paging the second user equipment, the first user equipment sends, to the second user equipment, information indicating the second user equipment to respond to paging of the second network. The second user equipment responds to the paging of the second network. In embodiments of this application, the first user equipment indicates the second user equipment to respond to the paging, so that the second user equipment does not monitor paging information all the time, thereby ensuring that the second user equipment does not miss the paging, reducing energy consumption of the second user equipment, and prolonging standby duration of the second user equipment.

## Description

This application claims priorities to Chinese Patent Application No. 202210513569.2, filed with the China National Intellectual Property Administration on May 11, 2022 and entitled "MOBILITY MANAGEMENT METHOD", and Chinese Patent Application No. 202210849322.8, filed with the China National Intellectual Property Administration on July 19, 2022 and entitled "COMMUNICATION METHOD AND APPARATUS", which are incorporated herein by reference in their entireties.

### TECHNICAL FIELD

This application relates to the communication field, and more specifically, to a method and an apparatus for reducing energy consumption of user equipment.

### BACKGROUND

Currently, some wearable products can perform communication through a communication system of an operator. These products usually have SIM cards and modem (modem) modules. However, the modem module usually generates huge energy consumption. To provide better experience for a user, the wearable product is generally compact in size, has a small battery capacity, and has short standby duration. Therefore, how to reduce energy consumption of this type of product and improve standby duration becomes a problem of concern in the industry.

In a conventional technology, a method for disabling a modem module is provided to reduce energy consumption. After connecting a mobile phone to a wearable product by using a short-range technology, a user disables a modem module of the wearable product, and replaces the wearable product with the mobile phone to complete communication. After the short-range connection between the mobile phone and the wearable product is broken, the user may choose to use the mobile phone or the wearable product for communication.

However, the conventional technology is applicable only to a case in which the mobile phone and the wearable product have a same number. In this case, how to reduce energy consumption of a wearable device when a mobile phone and the wearable device have different numbers becomes a problem that needs to be urgently resolved in the industry.

### SUMMARY

This application provides a communication method, to effectively reduce energy consumption of user equipment.

According to a first aspect, a communication method is provided, is applied to first user equipment, and includes: receiving first request information sent by second user equipment, where the first request information is used to request the first user equipment to receive information sent by a second network for paging the second user equipment; and in response to receiving the information sent by the second network for paging the second user equipment, sending, to the second user equipment, information indicating the second user equipment to respond to paging of the second network.

In this embodiment of this application, the first user equipment indicates the second user equipment to respond to the paging, so that the second user equipment does not monitor paging information all the time, thereby ensuring that the second user equipment does not miss the paging, reducing energy consumption of the second user equipment, and prolonging standby duration of the second user equipment.

With reference to the first aspect, in some implementations of the first aspect, the first request information includes an identifier of the second user equipment and a paging parameter of the second user equipment.

In this embodiment of this application, the identifier of the second user and the paging parameter of the second user equipment may enable the first user equipment to monitor, on a paging occasion of the second user equipment, paging information indicating that a paging object is the second user equipment, to improve monitoring efficiency and accuracy of the first user equipment. The paging occasion of the second user equipment is determined based on the paging parameter of the second user equipment.

For example, the paging parameter of the second user equipment may include the paging occasion and a paging frame of the second user equipment.

With reference to the first aspect, in some implementations of the first aspect, the first request information includes information about a camped frequency of the second user equipment or information about a camped cell of the second user equipment.

In this embodiment of this application, the information about the camped frequency of the second user equipment or the information about the camped cell of the second user equipment can help the first user equipment quickly position the frequency or the cell on which the second user equipment camps, thereby improving efficiency of monitoring paging information indicating that a paging object is the second user equipment.

With reference to the first aspect, in some implementations of the first aspect, the first request information further includes an identifier of the second network, and if the identifier of the second network is different from an identifier of a first network, the method further includes: sending, to the second user equipment, a request for information about a camped frequency of the second user equipment or information about a camped cell of the second user equipment.

In this embodiment of this application, the first user equipment determines that the identifier of the first network is different from the identifier of the second network, and the first user equipment requests to obtain the information about the camped frequency of the second user equipment or the information about the camped cell of the second user equipment, so that when monitoring paging information indicating that a paging object is the second user equipment, the first user equipment accurately camps on the frequency or the cell on which the second user equipment camps, thereby improving monitoring efficiency.

With reference to the first aspect, in some implementations of the first aspect, before the receiving first request information, the method further includes: sending an identifier of a first network to the second user equipment, where the first user equipment is in the first network; and if the identifier of the first network is the same as an identifier of the second network, the first request information indicates that the identifier of the first network is the same as the identifier of the second network; if the identifier of the first network is the same as an identifier of the second network, the first request information further includes the identifier of the second network; or if the identifier of the first network is different from an identifier of the second network, the first request information further includes the identifier of the second network, information about a camped frequency of the second user equipment, and information about a camped cell of the second user equipment.

In this embodiment of this application, the first user equipment sends the identifier of the first network to the second user equipment, and the second user equipment determines content of the first request information based on the identifier of the first network and the identifier of the second network. When the identifier of the first network is the same as the identifier of the second network, the first request information may not include the information about the camped frequency of the second user equipment and the information about the camped cell of the second user equipment, thereby saving transmission resources.

In a possible implementation, the first request information explicitly indicates that the identifier of the first network is the same as the identifier of the second network.

For example, the first request information includes one data bit. If the identifier of the first network is the same as the identifier of the second network, the data bit is 1; or if the identifier of the first network is different from the identifier of the second network, the data bit is 0.

For example, the first request information includes one piece of indication information. If the identifier of the first network is the same as the identifier of the second network, the indication information is True; or if the identifier of the first network is different from the identifier of the second network, the indication information is False.

In a possible implementation, the first request information implicitly indicates that the identifier of the first network is the same as the identifier of the second network.

For example, if the first request information includes the information about the camped frequency of the second user equipment or the information about the camped cell of the second user equipment, it is implied that the identifier of the first network is different from the identifier of the second network; or if the first request information does not include the information about the camped frequency of the second user equipment or the information about the camped cell of the second user equipment, it is implied that the identifier of the first network is the same as the identifier of the second network.

It should be noted that, in this embodiment of this application, that the first user equipment is in the first network may mean that the first user equipment is registered with the first network, and the first network may be a public land mobile network (public land mobile network, PLMN).

With reference to the first aspect, in some implementations of the first aspect, after the receiving first request information sent by second user equipment, if the first user equipment is in an idle state, the method further includes: if the identifier of the first network is different from the identifier of the second network, the first user equipment camps on a first frequency or a first cell in the second network, and receives, based on the paging parameter, the information broadcast by the second network for paging the second user equipment, where the first frequency or the first cell is a frequency or a cell that is able to receive the information for paging the second user equipment; or if the identifier of the first network is the same as the identifier of the second network, receiving, based on the paging parameter, the information broadcast by the second network for paging the second user equipment.

In this embodiment of this application, when the identifier of the first network is different from the identifier of the second network, the first user equipment camps on the first frequency or the first cell that is able to receive the information for paging the second user equipment, so that the first user equipment can receive, based on the paging parameter of the second user equipment, the information broadcast by the second network for paging the second user equipment. The first user equipment quickly positions the frequency or the cell that is able to receive the information for paging the second user equipment, to ensure that the information for paging the second user equipment is not missed.

In a possible implementation, the first frequency or the first cell in this embodiment of this application may be a frequency or a cell on which the second user equipment camps in the second network.

In a possible implementation, the second user equipment sends a tracking area list to the first user equipment. The first frequency or the first cell in this embodiment of this application may be a frequency or a cell in the tracking area list of the second user equipment.

It should be noted that the first user equipment may determine a paging occasion of the second user equipment based on the paging parameter of the second user equipment, and the first user equipment monitors, only on the paging occasion of the second user equipment, the information for paging the second user equipment. When the identifier of the first network is different from the identifier of the second network, if a paging occasion of the first user equipment conflicts with the paging occasion of the second user equipment, in other words, the paging occasion of the first user equipment is the same as the paging occasion of the second user equipment, a base station of the first user equipment negotiates with a base station of the second user equipment, to enable the paging occasion of the first user equipment to be different from the paging occasion of the second user equipment; or when the identifier of the first network is different from the identifier of the second network, if a paging occasion of the first user equipment conflicts with the paging occasion of the second user equipment, in other words, the paging occasion of the first user equipment is different from the paging occasion of the second user equipment, a base station of the first user equipment negotiates with a base station of the second user equipment, to enable the paging occasion of the first user equipment to be the same as the paging occasion of the second user equipment, where the base station of the first user equipment and the base station of the second user equipment are a same base station.

The paging occasion is negotiated. If the identifier of the first network is different from the identifier of the second network, the first user equipment may monitor, without affecting a paging service of the first user equipment, the information for paging the second user equipment; or if the identifier of the first network is the same as the identifier of the second network, the first user equipment may monitor, on a same paging occasion, information for paging the first user equipment and the second user equipment, thereby improving efficiency of monitoring paging information by the first user equipment and reducing impact on a service executed by the first user equipment.

It should be noted that in this application, when user equipment is in an idle (idle) state, there is no signaling connection between the user equipment and a network.

With reference to the first aspect, in some implementations of the first aspect, after the receiving first request information sent by second user equipment, if the first user equipment is in a non-idle state, the method further includes: if the identifier of the first network is different from the identifier of the second network, sending second request information to the first network, where the second request information is used to request the first network to suspend, in a first time period, sending information to the first user equipment, and the first time period is determined based on the paging parameter of the second user equipment.

In this embodiment of this application, when the first user equipment is in the non-idle state and the identifier of the first network is different from the identifier of the second network, the first user equipment enters an idle state in the first time period, and when the first user equipment enters the idle state, the first network stops sending the information to the first user equipment in the first time period, to ensure that the first user equipment can monitor the information for paging the second user equipment. The first time period is a paging occasion determined based on the paging parameter of the second user equipment. When the first user equipment is not in the first time period, the first user equipment may execute another service, thereby reducing impact on executing a service by the first user equipment.

It should be noted that the non-idle state in this application is a connected (connected) state. When user equipment is in the non-idle state, there is a signaling connection between the user equipment and a network.

With reference to the first aspect, in some implementations of the first aspect, the method further includes: if the first user equipment camps on a second frequency or a second cell in the second network in the first time period, and the second frequency or the second cell is a frequency or a cell that is able to receive the information for paging the second user equipment, receiving the information broadcast by the second network for paging the second user equipment.

In this embodiment of this application, the first user equipment may quickly position, in the first time period, the frequency or the cell that is able to receive the information for paging the second user equipment, thereby ensuring that the first user equipment can receive timely the information for paging the second user equipment.

In a possible implementation, the second frequency or the second cell in this embodiment of this application may be a frequency or a cell on which the second user equipment camps in the second network.

In a possible implementation, the second user equipment sends a tracking area list to the first user equipment. The second frequency or the second cell in this embodiment of this application may be a frequency or a cell in the tracking area list of the second user equipment.

With reference to the first aspect, in some implementations of the first aspect, the method further includes: determining, based on a service executed by the first user equipment, whether or not to receive the information sent by the second network for paging the second user equipment; and if the first user equipment determines to receive the information sent by the second network for paging the second user equipment, sending first response information to the second user equipment; or if the first user equipment determines not to receive the information sent by the second network for paging the second user equipment, sending second response information to the second user equipment.

In this embodiment of this application, the first user equipment determines, based on the executed service, whether the information for paging the second user equipment may be received, so that the service executed by the first user equipment is not affected, and reliability of executing the service by the first user equipment is improved.

In this embodiment of this application, the first response information indicates that the first user equipment can receive the information sent by the second network for paging the second user equipment, and the second response information indicates that the first user equipment cannot receive the information sent by the second network for paging the second user equipment.

With reference to the first aspect, in some implementations of the first aspect, the first request information further includes a tracking area list of the second user equipment.

In this embodiment of this application, the first user equipment can quickly position, based on the tracking area list of the second user equipment, the frequency or the cell that is able to receive the information for paging the second user equipment, and can also determine whether the second user equipment needs to update the tracking area list.

With reference to the first aspect, in some implementations of the first aspect, after the receiving first request information sent by second user equipment, if the identifier of the first network is the same as the identifier of the second network, the method further includes: The first user equipment receives a first tracking area identity broadcast by the second network; and if the tracking area list does not include the first tracking area identity, the first user equipment sends, to the second user equipment, information indicating the second user equipment to update the tracking area list.

In this embodiment of this application, the first user equipment may indicate the second user equipment to update the tracking area, to enable the second user equipment to receive the paging information.

It should be noted that, in this embodiment of this application, the first tracking area identity broadcast by the second network is a tracking area identity broadcast by a cell of a network device in the second network.

With reference to the first aspect, in some implementations of the first aspect, after the receiving first request information sent by second user equipment, if the identifier of the first network is different from the identifier of the second network, the method further includes: The first user equipment receives a second tracking area identity broadcast by the first network; and if the tracking area list does not include the second tracking area identity, the first user equipment sends, to the second user equipment, information indicating the second user equipment to update the tracking area list.

In this embodiment of this application, the first user equipment may indicate the second user equipment to update the tracking area, to enable the second user equipment to receive the paging information.

It should be noted that, in this embodiment of this application, the second tracking area identity broadcast by the first network is a tracking area identity broadcast by a cell of a network device in the first network.

According to a second aspect, a communication method is provided, and is applied to second user equipment. The method includes: sending first request information to first user equipment, where the first request information is used to request the first user equipment to receive information sent by a second network for paging the second user equipment; receiving, from the first user equipment, information indicating the second user equipment to respond to paging of the second network; and responding to the paging of the second network.

In this embodiment of this application, the second user equipment requests the first user equipment to receive the information for paging the second user equipment, so that the second user equipment does not monitor paging information all the time, thereby ensuring that the second user equipment does not miss the paging, reducing energy consumption of the second user equipment, and prolonging standby duration of the second user equipment.

For example, that the second user equipment responds to the paging of the second network includes: The second user equipment sends a service request message to a core network device (AMF), and performs a service request procedure, and after performing the service request procedure, the second user equipment enters a connected state, to perform a call process or perform data receiving and sending.

With reference to the second aspect, in some implementations of the second aspect, the first request information includes an identifier of the second user equipment and a paging parameter of the second user equipment.

In this embodiment of this application, the identifier of the second user and the paging parameter of the second user equipment may enable the first user equipment to monitor, on a paging occasion of the second user equipment, paging information indicating that a paging object is the second user equipment, to avoid missing the paging information indicating that the paging object is the second user equipment. The paging occasion of the second user equipment is determined based on the paging parameter of the second user equipment.

For example, the paging parameter of the second user equipment may include the paging occasion and a paging frame of the second user equipment.

With reference to the second aspect, in some implementations of the second aspect, the first request information includes: information about a camped frequency of the second user equipment or information about a camped cell of the second user equipment.

In this embodiment of this application, the information about the camped frequency of the second user equipment or the information about the camped cell of the second user equipment can help the first user equipment quickly position a frequency or a cell on which the second user equipment camps, thereby improving efficiency of monitoring the paging information indicating the paging object is the second user equipment.

With reference to the second aspect, in some implementations of the second aspect, the first request information further includes an identifier of the second network, and if the identifier of the second network is different from an identifier of a first network, the method further includes: in response to receiving a request sent by the first user equipment for information about a camped frequency of the second user equipment or information abouta camped cell of the second user equipment, sending the information about the camped frequency of the second user equipment or the information about the camped cell of the second user equipment to the first user equipment.

In this embodiment of this application, the second user equipment sends, to the first user equipment, the information about the camped frequency of the second user equipment or the information about the camped cell of the second user equipment, so that the first user equipment can precisely camp on the frequency or the cell on which the second user equipment camps, thereby improving monitoring reliability.

With reference to the second aspect, in some implementations of the second aspect, before the receiving first request information, the method further includes: receiving an identifier of a first network sent by the first user equipment, where the first user equipment is in the first network; and if the identifier of the first network is the same as an identifier of the second network, the first request information indicates that the identifier of the first network is the same as the identifier of the second network; if the identifier of the first network is the same as an identifier of the second network, the first request information further includes the identifier of the second network; or if the identifier of the first network is different from an identifier of the second network, the first request information further includes the identifier of the second network, information about a camped frequency of the second user equipment, and information about a camped cell of the second user equipment.

In this embodiment of this application, the second user equipment determines content of the first request information based on the identifier of the first network and the identifier of the second network. When the identifier of the first network is the same as the identifier of the second network, the first request information may not include the information about the camped frequency of the second user equipment and the information about the camped cell of the second user equipment, thereby saving transmission resources.

In a possible implementation, the first request information explicitly indicates that the identifier of the first network is the same as the identifier of the second network.

For example, the first request information includes one data bit. If the identifier of the first network is the same as the identifier of the second network, the data bit is 1; or if the identifier of the first network is different from the identifier of the second network, the data bit is 0.

For example, the first request information includes one piece of indication information. If the identifier of the first network is the same as the identifier of the second network, the indication information is True; or if the identifier of the first network is different from the identifier of the second network, the indication information is False.

In a possible implementation, the first request information implicitly indicates that the identifier of the first network is the same as the identifier of the second network.

For example, if the first request information includes the information about the camped frequency of the second user equipment or the information about the camped cell of the second user equipment, it is implied that the identifier of the first network is different from the identifier of the second network; or if the first request information does not include the information about the camped frequency of the second user equipment or the information about the camped cell of the second user equipment, it is implied that the identifier of the first network is the same as the identifier of the second network.

It should be noted that, in this embodiment of this application, that the first user equipment is in the first network may mean that the first user equipment is registered with the first network, and the first network may be a PLMN.

With reference to the second aspect, in some implementations of the second aspect, the first request information further includes a tracking area list of the second user equipment.

In this embodiment of this application, the first user equipment can quickly position, based on the tracking area list of the second user equipment, the frequency or the cell on which the information for paging the second user equipment may be received, and the first user equipment can also determine whether the second user equipment needs to update the tracking area list.

With reference to the second aspect, in some implementations of the second aspect, after the sending first request information to first user equipment, the method further includes:
receiving information that is sent by the first user equipment and that indicates the second user equipment to update the tracking area list; updating the tracking area list; and sending an updated tracking area list to the first user equipment.

For example, that the second user equipment updates the tracking area list includes: If the second user equipment is in a 5G network, in other words, the second network is the 5G network, the second user equipment sends a Registration request to the second network, and the second network sends a Registration accept to the second user equipment, where the Registration accept includes the updated tracking area list (Tracking Area list); or if the second user equipment is in a 4G network, in other words, the second network is the 4G network, the second user equipment sends a tracking area Update request to the second network, and the second network sends a tracking area Update accept to the second user equipment, where the tracking area Update accept includes the updated tracking area list.

In this embodiment of this application, the second user equipment sends the updated tracking area list to the first user equipment, so that the first user equipment can quickly position the frequency or the cell on which the information for paging the second user equipment may be received, thereby improving monitoring efficiency and reliability.

With reference to the second aspect, in some implementations of the second aspect, the method further includes: receiving first response information from the first user equipment, where the first response information indicates that the first user equipment may receive information sent by the second network for paging the second user equipment; and before receiving the information that is from the first user equipment and that indicates the second user equipment to respond to the paging of the second network, the second user equipment does not receive the paging information from the second network.

In this embodiment of this application, the first user equipment may receive the information sent by the second network for paging the second user equipment, and notify the second user equipment by using the first response information. The second user equipment receives the paging information of the second network only after receiving an indication from the first user equipment, so that the second user equipment does not monitor paging information all the time, thereby ensuring that the second user equipment does not miss the paging, reducing energy consumption of the second user equipment, and prolonging standby duration of the second user equipment.

With reference to the second aspect, in some implementations of the second aspect, the method further includes: receiving second response information from the first user equipment, where the second response information indicates that the first user equipment cannot receive the information sent by the second network for paging the second user equipment.

In this embodiment of this application, when the second user equipment receives that the first user equipment does not agree to receive the information sent by the second network for paging the second user equipment, the second user equipment continues to communicate with the second network, thereby ensuring reliability of communication between the second user equipment and the second network.

With reference to the second aspect, in some implementations of the second aspect, the method further includes: obtaining a location parameter and a motion parameter of the second user equipment; determining a status of the second user equipment based on the location parameter and the motion parameter; and if the second user equipment is in a static state, sending third information to the second network, where the third information is used by the second network to determine a first communication parameter of the second user equipment; or if the second user equipment is in a non-static state, sending fourth information to the second network, where the fourth information is used by the second network to determine a second communication parameter of the second user equipment, where energy consumption of the second user equipment when the second user equipment communicates with the second network by using the first communication parameter is less than energy consumption of the second user equipment when the second user equipment communicates with the second network by using the second communication parameter.

It should be noted that the location parameter is used to describe location information of the second user equipment. For example, the location parameter may be a global positioning system (Global Positioning System, GPS) parameter of the second user equipment. The motion parameter is used to describe motion information of the second user equipment. For example, the motion parameter may be data of sensors such as a gravity meter and an accelerometer of the second user equipment.

In this embodiment of this application, the second user equipment determines, based on the location parameter and the motion parameter, the communication parameter used by the second user equipment, so that the communication parameter can be flexibly configured, unnecessary energy consumption is reduced, energy consumption of the second user equipment when the second user equipment communicates with the second network is reduced, and usage duration of the second user equipment is prolonged.

With reference to the second aspect, in some implementations of the second aspect, the method further includes: obtaining a location parameter and a motion parameter of the second user equipment; determining a status of the second user equipment based on the location parameter and the motion parameter; and if the second user equipment is in a static state, sending fifth information to a server, where the fifth information is used by the server to determine a first positioning parameter of the second user equipment; or if the second user equipment is in a non-static state, sending sixth information to a server, where the sixth information is used by the server to determine a second positioning parameter of the second user equipment, where energy consumption of the second user equipment when the server positions the second user equipment by using the first positioning parameter is less than energy consumption of the second user equipment when the server positions the second user equipment by using the second positioning parameter.

In this embodiment of this application, the server determines the used positioning parameter based on the location parameter and the motion parameter of the second user equipment, so that the positioning parameter can be flexibly configured, unnecessary energy consumption is reduced, energy consumption of the second user equipment when the server positions the second user equipment is reduced, and usage duration of the second user equipment is prolonged.

According to a third aspect, a communication apparatus is provided, including: a transceiver module, configured to receive first request information sent by second user equipment, where the first request information is used to request the communication apparatus to receive information sent by a second network for paging the second user equipment; and a processing module, configured to determine that the information sent by the second network for paging the second user equipment is received, where the transceiver module is further configured to send, to the second user equipment, information indicating the second user equipment to respond to paging of the second network.

With reference to the third aspect, in some implementations of the third aspect, the first request information includes an identifier of the second user equipment and a paging parameter of the second user equipment.

With reference to the third aspect, in some implementations of the third aspect, the first request information further includes an identifier of the second user equipment and a paging parameter of the second user equipment.

With reference to the third aspect, in some implementations of the third aspect, the first request information further includes an identifier of the second network, and the processing module is further configured to determine whether the identifier of the second network is the same as an identifier of a first network; and if the identifier of the second network is different from the identifier of the first network, the transceiver module is further configured to send, to the second user equipment, a request for information about a camped frequency of the second user equipment or information about a camped cell of the second user equipment.

With reference to the third aspect, in some implementations of the third aspect, before receiving the first request information, the transceiver module is further configured to send an identifier of a first network to the second user equipment, where the communication apparatus is in the first network; the processing module is further configured to determine whether an identifier of the second network is the same as the identifier of the first network; and if the identifier of the first network is the same as the identifier of the second network, the first request information indicates that the identifier of the first network is the same as the identifier of the second network; if the identifier of the first network is the same as the identifier of the second network, the first request information further includes the identifier of the second network; or if the identifier of the first network is different from the identifier of the second network, the first request information further includes the identifier of the second network, information about a camped frequency of the second user equipment, and information about a camped cell of the second user equipment.

With reference to the third aspect, in some implementations of the third aspect, after the receiving first request information sent by second user equipment, the processing module is further configured to determine whether the communication apparatus is in an idle state; and if the communication apparatus is in the idle state and the identifier of the first network is different from the identifier of the second network, the processing module is further configured to camp the communication apparatus on a first frequency or a first cell in the second network; and the transceiver module is further configured to receive, based on the paging parameter, the information broadcast by the second network for paging the second user equipment, where the first frequency or the first cell is a frequency or a cell on which the information for paging the second user equipment may be received; or if the communication apparatus is in the idle state and the identifier of the first network is the same as the identifier of the second network, the transceiver module is further configured to receive, based on the paging parameter, the information broadcast by the second network for paging the second user equipment.

With reference to the third aspect, in some implementations of the third aspect, after the receiving first request information sent by second user equipment, the processing module is further configured to determine whether the communication apparatus is in an idle state; or if the communication apparatus is in a non-idle state and the identifier of the first network is the same as the identifier of the second network, the transceiver module is further configured to send first information to the first network, where the first information includes the identifier of the second user equipment, and the first information indicates the second network to send, to the communication apparatus, the information for paging the second user equipment.

With reference to the third aspect, in some implementations of the third aspect, after receiving the first request information sent by the second user equipment, the processing module is further configured to determine whether the communication apparatus is in an idle state; and if the communication apparatus is in a non-idle state and the identifier of the first network is the same as the identifier of the second network, the transceiver module is further configured to send second request information to the first network to suspend, in a first time period, sending information to the communication apparatus, and the first time period is determined by the processing module based on the paging parameter of the second user equipment.

With reference to the third aspect, in some implementations of the third aspect, the processing module is further configured to camp the communication apparatus on a second frequency or a second cell in the second network in the first time period, where the second frequency or the second cell is a frequency or a cell that is able to receive the information for paging the second user equipment; and the transceiver module is further configured to receive information broadcast by the second network for paging the second user equipment.

With reference to the third aspect, in some implementations of the third aspect, the processing module is further configured to determine, based on a service executed by the communication apparatus, whether or not to receive the information sent by the second network for paging the second user equipment; and if the first user equipment determines to receive the information sent by the second network for paging the second user equipment, the transceiver module is further configured to send first response information to the second user equipment; or if the first user equipment determines not to receive the information sent by the second network for paging the second user equipment, the transceiver module is further configured to send second response information to the second user equipment.

With reference to the third aspect, in some implementations of the third aspect, the first request information further includes a tracking area list of the second user equipment.

With reference to the third aspect, in some implementations of the third aspect, after receiving the first request information sent by the second user equipment, if the identifier of the first network is the same as the identifier of the second network, the transceiver module is further configured to receive a first tracking area identity broadcast by the second network; the processing module is further configured to determine whether the tracking area list includes the first tracking area identity; and if the tracking area list does not include the first tracking area identity, the transceiver module is further configured to send, to the second user equipment, information indicating the second user equipment to update the tracking area list.

With reference to the third aspect, in some implementations of the third aspect, after receiving the first request information sent by the second user equipment, if the identifier of the first network is different from the identifier of the second network, the transceiver module is further configured to receive a second tracking area identity broadcast by the second network; the processing module is further configured to determine whether the tracking area list includes the second tracking area identity; and if the tracking area list does not include the second tracking area identity, the transceiver module is further configured to send, to the second user equipment, information indicating the second user equipment to update the tracking area list.

According to a fourth aspect, a communication apparatus is provided, including: a transceiver module, configured to send first request information to first user equipment, where the first request information is used to request the first user equipment to receive information sent by a second network for paging the communication apparatus, and the transceiver module is further configured to receive, from the first user equipment, information indicating the communication apparatus to respond to paging of the second network; and a processing module, configured to respond to the paging of the second network.

With reference to the fourth aspect, in some implementations of the fourth aspect, the first request information includes an identifier of the communication apparatus and a paging parameter of the communication apparatus.

With reference to the fourth aspect, in some implementations of the fourth aspect, the first request information further includes an identifier of the second network, and if the identifier of the second network is different from an identifier of a first network, the transceiver module is further configured to send, to the first user equipment, information about a camped frequency of the communication apparatus or information about a camped cell of the communication apparatus.

With reference to the fourth aspect, in some implementations of the fourth aspect, the first request information further includes an identifier of the communication apparatus and a paging parameter of the communication apparatus.

With reference to the fourth aspect, in some implementations of the fourth aspect, before sending the first request information to the first user equipment, the transceiver module is further configured to receive an identifier of a first network sent by the first user equipment, where the first user equipment is in the first network; the processing module is further configured to determine whether the identifier of the first network is the same as an identifier of the second network; and if the identifier of the first network is the same as the identifier of the second network, the first request information indicates that the identifier of the first network is the same as the identifier of the second network; if the identifier of the first network is the same as the identifier of the second network, the first request information further includes the identifier of the second network; or if the identifier of the first network is different from the identifier of the second network, the first request information further includes the identifier of the second network, information about a camped frequency of the communication apparatus, and information about a camped cell of the communication apparatus.

With reference to the fourth aspect, in some implementations of the fourth aspect, the first request information further includes a tracking area list of the communication apparatus.

With reference to the fourth aspect, in some implementations of the fourth aspect, after sending the first request information to the first user equipment, the transceiver module is further configured to receive information that is sent by the first user equipment and that indicates the communication apparatus to update the tracking area list; the processing module is further configured to update the tracking area list; and the transceiver module is further configured to send an updated tracking area list to the first user equipment.

With reference to the fourth aspect, in some implementations of the fourth aspect, the transceiver module is further configured to receive first response information from the first user equipment, where the first response information indicates that the first user equipment may receive information sent by the second network for paging the communication apparatus; and before receiving the information that is from the first user equipment and that indicates the communication apparatus to respond to the paging of the second network, the communication apparatus does not receive paging information from the second network.

With reference to the fourth aspect, in some implementations of the fourth aspect, the transceiver module is further configured to receive second response information from the first user equipment, where the second response information indicates that the first user equipment cannot receive the information sent by the second network for paging the communication apparatus.

With reference to the fourth aspect, in some implementations of the fourth aspect, the processing module is further configured to obtain a location parameter and a motion parameter of the communication apparatus; the processing module is further configured to determine a status of the communication apparatus based on the location parameter and the motion parameter; and if the communication apparatus is in a static state, the transceiver module is further configured to send third information to the second network, where the third information is used by the second network to determine a first communication parameter of the communication apparatus; or if the communication apparatus is in a non-static state, the transceiver module is further configured to send fourth information to the second network, where the fourth information is used by the second network to determine a second communication parameter of the communication apparatus, where energy consumption of the communication apparatus when the communication apparatus communicates with the second network by using the first communication parameter is less than energy consumption of the communication apparatus when the communication apparatus communicates with the second network by using the second communication parameter.

With reference to the fourth aspect, in some implementations of the fourth aspect, the processing module is further configured to obtain a location parameter and a motion parameter of the communication apparatus; the processing module is further configured to determine a status of the communication apparatus based on the location parameter and the motion parameter; and if the communication apparatus is in a static state, the transceiver module is further configured to send fifth information to a server, where the fifth information is used by the server to determine a first positioning parameter of the communication apparatus; or if the communication apparatus is in a non-static state, the transceiver module is further configured to send sixth information to a server, where the sixth information is used by the server to determine a second positioning parameter of the communication apparatus, where energy consumption of the communication apparatus when the server positions the communication apparatus by using the first positioning parameter is less than energy consumption of the communication apparatus when the server positions the communication apparatus by using the second positioning parameter.

According to a fifth aspect, a communication apparatus is provided, including a processor, configured to execute a computer program stored in a memory, to enable the communication apparatus to perform the communication method according to the first aspect or the second aspect.

According to a sixth aspect, a chip is provided, including: a processor, configured to invoke a computer program from a memory and run the computer program, to enable a communication device on which the chip system is installed to perform the communication method according to the first aspect and/or the second aspect.

According to a seventh aspect, a computer program is provided, where when the computer program is executed by a communication apparatus, the communication method according to the first aspect and/or the second aspect is implemented.

According to an eighth aspect, a computer-readable storage medium is provided, where the computer-readable storage medium stores a computer program; and when the computer program runs on a computer, the computer is enabled to perform the communication method according to the first aspect and/or the second aspect.

### BRIEF DESCRIPTION OF DRAWINGS

FIG. 1 is a diagram of an application scenario according to an embodiment of this application;
FIG. 2 is a schematic flowchart of a method 200 according to an embodiment of this application;
FIG. 3 is a schematic flowchart of a method 300 according to an embodiment of this application;
FIG. 4 is a schematic flowchart of a method 400 according to an embodiment of this application;
FIG. 5 is a schematic flowchart of a method 500 according to an embodiment of this application;
FIG. 6 is a schematic flowchart of a method 600 according to an embodiment of this application;
FIG. 7 is a diagram of a communication apparatus 10 according to an embodiment of this application; and
FIG. 8 is a diagram of a communication apparatus 20 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a global system of mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, a fixed-mobile convergence network system, or a future 6th generation (6th generation, 6G) system, and the like.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The network device in embodiments of this application may be a device configured to communicate with a terminal device. The network device may be a base transceiver station (base transceiver station, BTS) in a global system for mobile communications (global system for mobile communications, GSM) or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in a future evolved PLMN, or the like. This is not limited in embodiments of this application.

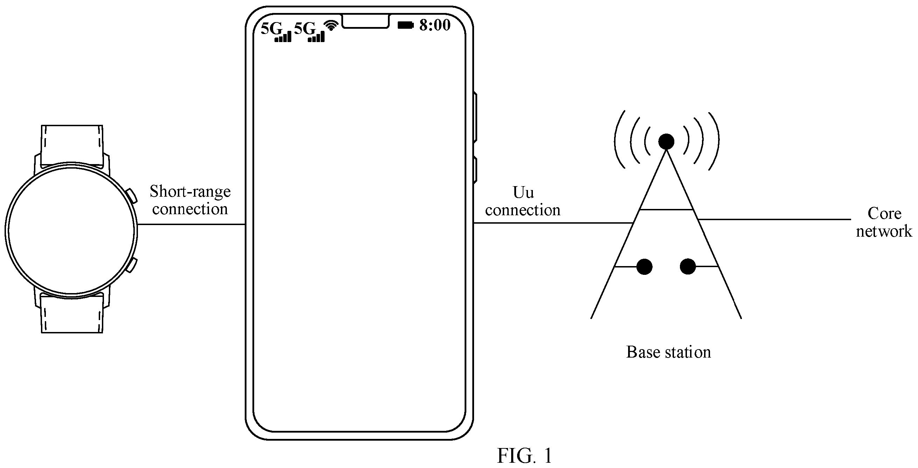

It should be noted that an idle state or a connected state in this application is a connection management state of UE, in other words, whether there is a signaling connection between the UE and a network. When the user equipment is in the idle (idle) state, there is no signaling connection between the user equipment and the network. When the user equipment is in the connected (connected) state, there is a signaling connection between the user equipment and the network. A non-idle state and a connected (connected) state in this application are equivalent. FIG. 1 is a diagram of an application scenario according to an embodiment of this application. As shown in FIG. 1, in this embodiment of this application, both a mobile phone and a watch have a communication function, and may perform communication by using an operator communication system. The operator communication system includes a base station and a core network. The mobile phone and the watch have different phone numbers, and the mobile phone and the watch may be connected by using a short-range technology. For example, the short-range technology includes Bluetooth, Wi-Fi, sidelink, and the like.

In this embodiment of this application, the watch is connected to the mobile phone by using a short-range function module. For example, the watch is connected to the mobile phone by using a Bluetooth module, a Wi-Fi module, or D2D. The watch and the mobile phone access the operator communication system via the base station. The operator core network provides services for the watch and the mobile phone. For example, the core network may provide call services, data services, and the like for the watch and the mobile phone.

The mobile phone may manage the watch via a server. For example, the mobile phone may view a position of the watch, may perform parameter configuration on the watch, and may manage management members of the watch. The watch, the mobile phone, and other devices that can manage the watch need to be registered with the server. When the mobile phone manages the watch, the mobile phone first sends a management command to the server, and then the server sends the management command to the watch, to complete management on the watch.

In a possible implementation, the mobile phone becomes an administrator of the watch by scanning a two-dimensional code displayed on the watch.

It should be noted that, for ease of description, in this embodiment of this application, a watch having a communication function is selected as a wearable product. Actually, this is not limited in this application. This application is applicable to all wearable products having communication functions. For example, the wearable product in this embodiment of this application may be a band having a communication function, smart glasses, an augmented reality (augmented reality, AR) product, a virtual reality (virtual reality, VR) product, an extended reality (extended reality, XR) product, a mixed reality (mixed reality, MR) product, or the like. A first network and a second network are mainly used for ease of description.

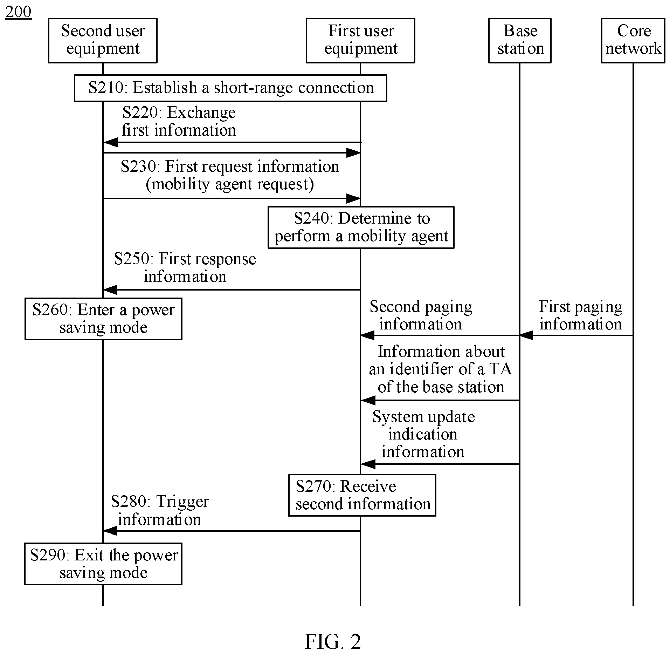

FIG. 2 is a schematic flowchart of a method 200 according to an embodiment of this application. It should be noted that, for ease of description, in this embodiment of this application, a PLMN with which first user equipment is registered is referred to as a first network, and a PLMN with which second user equipment is registered is referred to as a second network. In the method 200 in this embodiment of this application, the first network is the same as the second network, and the first user equipment is in an idle state. It should be noted that, for a case in which the first network is the same as the second network and the first user equipment is in a non-idle state, refer to a method 300 in this application. For a case in which the first network is different from the second network, refer to a method 400 and a method 500 in this application.

For example, in this embodiment of this application, the first user equipment is a mobile phone, and the second user equipment is a wearable product having a communication function.

It should be noted that, in this embodiment of this application, that the first user equipment is in the first network may include that the first user equipment is registered with the first network, and that the second user equipment is in the second network may include that the second user equipment is registered with the second network.

It should be noted that, in this embodiment of this application, a mobility agent includes: The first user equipment receives paging information in place of the second user equipment, the first user equipment indicates the second user equipment to perform location updating, and the first user equipment indicates the second user equipment to perform system updating.

S210: The first user equipment establishes a short-range connection to the second user equipment.

Optionally, in S220, the first user equipment exchanges first information with the second user equipment. The first information indicates a PLMN with which user equipment is registered.

For example, the first information may include an identifier of the PLMN. Specifically, the identifier of the PLMN may include a mobile country code (mobile country code, MCC) and a mobile network code (mobile network code, MNC).

In a possible implementation, both the first user equipment and the second user equipment send the first information to each other. In this implementation, the first user equipment may actively send the first information of the first user equipment to the second user equipment, or may send the first information of the first user equipment to the second user equipment after receiving request information of the second user equipment; and the second user equipment may actively send the first information of the second user equipment to the first user equipment, or may send the first information of the second user equipment to the first user equipment after receiving request information of the first user equipment.

In a possible implementation, the first user equipment and the second user equipment receive the first information sent by a network device. For example, a first server sends the first information of the second user equipment to the first user equipment, and the first server sends the first information of the first user equipment to the second user equipment. The first user equipment and the second user equipment are registered with the first server.

In a possible implementation, the second user equipment obtains an identifier of the first network in the first information sent by the first user equipment, and if the second user equipment determines that the identifier of the first network is the same as an identifier of the second network, first request information indicates that the identifier of the first network is the same as the identifier of the second network; or if the second user equipment determines that the identifier of the first network is different from an identifier of the second network, refer to step S420 in the method 400 and step S520 in the method 500. Details are not described herein.

The first request information may explicitly indicate that the identifier of the first network is the same as the identifier of the second network.

For example, the first request information includes one data bit. If the identifier of the first network is the same as the identifier of the second network, the data bit is 1.

For example, the first request information includes one piece of indication information. If the identifier of the first network is the same as the identifier of the second network, the indication information is True.

The first request information may implicitly indicate that the identifier of the first network is the same as the identifier of the second network.

For example, if the first request information does not include information about a camped cell of the second user equipment or information about a camped frequency of the second user equipment, it implicitly indicates that the identifier of the first network is the same as the identifier of the second network.

In a possible implementation, the first user equipment obtains an identifier of the second network in the first information sent by the second user equipment, and if determining that the second network is the same as the first network, the first user equipment does not reply or replies that the second network is the same as the first network; or if the first user equipment determines that the second network is different from the first network, refer to step S420 in the method 400 and step S520 in the method 500.

It should be noted that, in this embodiment, the first information is exchanged, so that the first user equipment and the second user equipment can learn that the first network and the second network are a same PLMN.

S230: The second user equipment sends the first request information to the first user equipment. The first request information is used to initiate a mobility agent request to the first user equipment, and initiating the mobility agent request to the first user equipment may include: requesting the first user equipment to receive information for paging the second user equipment, requesting the first user equipment to indicate the second user equipment to perform location updating, and requesting the first user equipment to indicate the second user equipment to perform system updating.

The first request information may include at least one of a first identifier, a second identifier, a paging parameter, and a tracking area (tracking area, TA) list.

The first identifier is the identifier of the second network. The second identifier is an identifier of the second user equipment. For example, the identifier of the second user equipment may be a serving temporary mobile subscriber identity (serving temporary mobile subscriber identity, S-TMSI). The paging parameter includes a paging occasion (paging occasion, PO) of the second user equipment and a paging frame (paging frame, PF) of the second user equipment. The TA list is used by the first user equipment to notify the second user equipment to update the TA when the first user equipment determines that the first user equipment is located outside an area described in the TA list.

For example, the area described in the TA list includes A, B, and C, the first user equipment moves to an area D, and the area D does not belong to the TA list. In this case, the first user equipment may notify the second user equipment to update the TA list, and the second user equipment adds the area D to the TA list.

It should be noted that one or more of the first identifier, the second identifier, the paging parameter, and the TA list may be pre-stored in the first user equipment, and therefore do not need to be delivered.

For example, the first user equipment may store a first mapping relationship, to be specific, one second identifier corresponds to one parameter group, and the parameter group includes one or more of the first identifier, the TA list, and the paging parameter, so that the first request information only needs to carry the second identifier.

For example, the first user equipment may store a second mapping relationship, to be specific, one TA list corresponds to one parameter group, and the parameter group includes one or more of the paging parameter and the first identifier, so that the first request information only needs to carry the second identifier and the TA list.

In this embodiment of this application, the first request information may be generated after the second user equipment receives the first information sent by the first user equipment, or may be generated when the second user equipment does not exchange the first information with the first user equipment.

In a possible implementation, the second user equipment receives the first information sent by the first user equipment, the second user equipment obtains the identifier of the first network from the first information, the second user equipment determines that the identifier of the first network is the same as the identifier of the second network, and the second user equipment generates the first request information.

In a possible implementation, if the first user equipment and the second user equipment do not exchange the first information, the second user equipment generates the first request information. The first request information further includes the camped frequency of the second user equipment and the camped cell of the second user equipment.

S240: After receiving the first request information, the first user equipment determines, based on a service status of the first user equipment, whether to perform the mobility agent.

Specifically, when the first user equipment is currently in the idle state, the first user equipment determines to perform the mobility agent; and when the first user equipment is in the non-idle state, the first user equipment needs to determine, based on a service executed in a foreground, whether to perform the mobility agent. For specific content, refer to step S340 in the method 300. Details are not described herein.

It should be noted that, for a case in which the first user equipment determines not to perform the mobility agent, refer to a method 600 in an embodiment of this application. Details are not described herein.

It should be understood that, in this embodiment of this application, the first user equipment is in the idle state, and the first user equipment performs the mobility agent. For specific content, refer to S250 to S280. Details are not described herein.

S250: The first user equipment sends first response information to the second user equipment. The first response information indicates that the second user equipment has accepted the mobility agent request. It should be noted that, for a case in which the first user equipment does not perform the mobility agent, refer to steps S610 to S660 in the method 600 in this application. Details are not described herein.

S260: The second user equipment switches to a power saving mode based on the first response information.

In this embodiment of this application, compared with a normal mode, when user equipment is in the power saving mode, power consumption of the user equipment is lower. For example, the power saving mode includes but is not limited to: an airplane mode; a modem module of the user equipment being in a low-current non-working state; and a modem module of the second user equipment being in a power-off state. It should be understood that a specific representation form of the power saving mode is not limited in this application.

S270: The first user equipment receives second information. The second information may include at least one of paging information, an identifier of a TA to which a camped cell of the first user equipment belongs, and system update indication information.

Specifically, in a possible implementation, the second information includes second paging information. The second paging information is generated by a base station based on first paging information sent by a core network to the base station. The first paging information includes an identifier of a paged device. An identifier of a paged object included in the second paging information is the same as the identifier of the paged object in the first paging information. The base station broadcasts the second paging information on a paging occasion, where the paging occasion is determined based on the paged object in the first paging information.

In a possible implementation, the second information includes the identifier of the TA to which the camped cell of the first user equipment belongs, and the second information is information broadcast by a cell of a base station in the second network.

In a possible implementation, the second information includes the system update indication information, and the second information is information broadcast by a cell of a base station in the second network.

S280: The first user equipment sends notification information to the second user equipment.

It should be noted that the notification information may only indicate the second user equipment to exit the power saving mode and receive information from the second network. The second user equipment determines a next action based on the information from the second network. The information from the second network may be forwarded by the first user equipment to the second user equipment by using the notification information, or may be obtained by the second user equipment from the second network. This is not limited in this application. The notification information may alternatively indicate a next action of the second user equipment, and the next action is determined based on the second information.

In a possible implementation, the notification information may indicate the second user equipment to receive the information from the second network, and the second user equipment determines the next action based on the information from the second network.

For example, the first user equipment detects the second information on the paging occasion of the second user equipment. The second information includes the second paging information. If the first user equipment identifies that the second paging information includes the second identifier, the first user equipment sends the notification information to the second user equipment.

The first user equipment receives the second information. The second information includes the identifier of the TA to which the camped cell of the first user equipment belongs. If the first user equipment determines that the TA list in the first request information does not include the identifier of the TA to which the camped cell of the first user equipment belongs, the first user equipment sends the notification information to the second user equipment.

The first user equipment receives the second information, and if the second information includes the system update indication information, the first user equipment sends the notification information to the second user equipment.

In a possible implementation, the notification information may indicate the next action of the second user equipment.

For example, when the first user equipment detects the second paging information including the second identifier, the first user equipment sends first notification information to the second user equipment, to indicate the second user equipment to respond to paging.

When the first user equipment determines that a TA to which a mobile network cell provided by the base station belongs is not in the TA list in the first request information, the first user equipment sends second notification information to the second user equipment to indicate the second user equipment to update the TA list. A specific determining manner example is as follows: The first user equipment reads a system message of a currently camped cell of the first user equipment, where the system message includes an identity (tracking area identity, TAI) of a tracking area to which the cell belongs. When the TA list in the first request information does not include the TAI, the first user equipment determines that the second user equipment moves out of an area identified by the TA list in the first request information, to send the second notification information to the second user equipment.

When the first user equipment determines that the system message changes, the first user equipment sends third notification information to the second user equipment, to indicate the second user equipment to read the system message. Specifically, the first user equipment determines, by receiving indication information of a network, that the system message changes.

It should be noted that, in another possible implementation, when the first user equipment determines that the system message changes, the first user equipment directly sends an updated system message to the second user equipment. In this manner, the first user equipment does not need to send the third notification information, and the second user equipment does not need to perform an action described in S290, to be specific, does not need to exit the power saving mode or perform an action of reading the system message sent by the network, thereby reducing power consumption.

S290: The second user equipment exits the power saving mode based on the notification information, and performs a related operation.

If the notification information only indicates the second user equipment to exit the power saving mode and receive the information from the second network, where the information from the second network may be forwarded by the first user equipment to the second user equipment by using the notification information, or may be obtained by the second user equipment from the second network, which is not limited in this application, the second user equipment exits the power saving mode, and determines the next action based on the information from the second network; or if the notification information indicates the next action of the second user equipment, the second user equipment performs the related operation in the notification information.

Specifically, if the second user equipment receives the first notification information, the second user equipment responds to the paging; if the notification information indicates that the second user equipment receives the second notification information, the second user equipment updates the TA list; or if the second user equipment receives the third notification information, the second user equipment updates the system message.

For example, that the second user equipment responds to the paging includes: The second user equipment sends a service request message to a core network device (AMF), and performs a service request procedure, and after performing the service request procedure, the second user equipment enters a connected state, to perform a call process or perform data receiving and sending.

For example, that the second user equipment updates the TA list includes: If the second user equipment is in a 5G network, the second user equipment sends a registration request to the core network, and the core network sends a registration accept to the second user equipment, where the registration accept includes an updated TA list; or if the second user equipment is in a 4G network, the second user equipment sends a tracking area update request to the core network, and the core network sends a tracking area update accept to the second user equipment, where the tracking area update accept includes an updated TA list.

For example, that the second user equipment updates the system message includes: The second user equipment reads the system message, to obtain the updated system message.

In a possible implementation, if the notification information includes the second notification information, and the second user equipment updates the TA list, the second user equipment sends the updated TA list to the first user equipment, and the first user equipment monitors, based on the updated TA list, the information for paging the second user equipment.

It should be noted that if the first user equipment does not send the notification information to the second user equipment, the second user equipment keeps in the power saving mode.

It should be noted that, after the first user equipment is disconnected from the second user equipment, the first user equipment and the second user equipment may store the first information in a period of time. When the first user equipment and the second user equipment reestablish a connection in the period of time, the first user equipment and the second user equipment may directly obtain the first information.

It should be noted that, in this embodiment of this application, it should be ensured as much as possible that a paging occasion of the first user equipment is the same as the paging occasion of the second user equipment. When monitoring paging information indicating that a paging object is the second user equipment, the first user equipment may simultaneously monitor paging information indicating that a paging object is the first user equipment.

In this embodiment of this application, the second user equipment and the first user equipment use a communication system of a same operator. When the second network does not send information to the second user equipment, the second user equipment may switch to the power saving mode, to reduce power consumption of the second user equipment and prolong standby duration of the second user equipment. When the second network sends information to the second user equipment, the first user equipment performs monitoring and notifies the second user equipment, to ensure that the second user equipment does not miss the information and improve communication reliability.

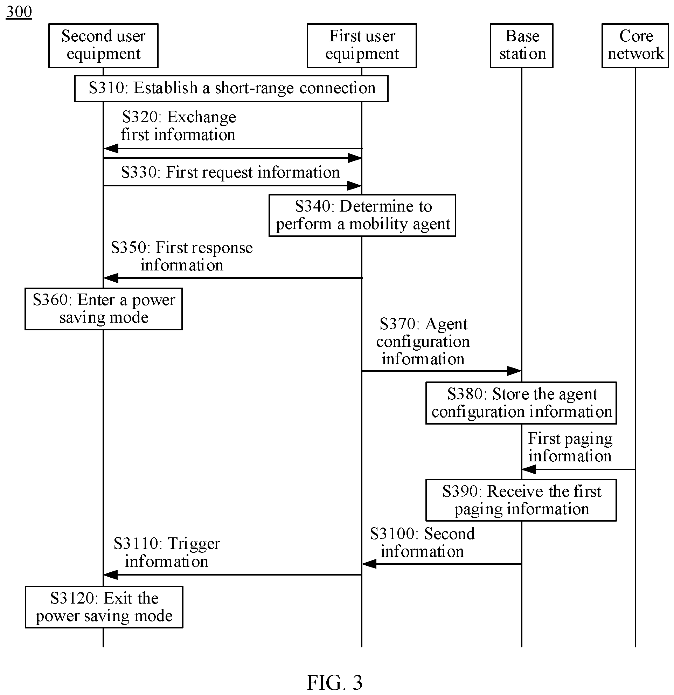

FIG. 3 is a schematic flowchart of a method 300 according to an embodiment of this application. It should be noted that, for ease of description, in this embodiment of this application, a PLMN with which first user equipment is registered is referred to as a first network, and a PLMN with which second user equipment is registered is referred to as a second network. In the method 300 in this embodiment of this application, the first network is the same as the second network, and the first user equipment is in a non-idle state. It should be noted that, for a case in which the first network is different from the second network, refer to a method 400 and a method 500 in this application. Details are not described herein.

For example, in this embodiment of this application, the first user equipment may be a mobile phone, and the second user equipment may be a wearable product having a communication function.

It should be noted that, in this embodiment of this application, that the first user equipment is in the first network may include that the first user equipment is registered with the first network, and that the second user equipment is in the second network may include that the second user equipment is registered with the second network.

It should be noted that, in this embodiment of this application, a mobility agent includes: The first user equipment receives paging information in place of the second user equipment, the first user equipment indicates the second user equipment to perform location updating, and the first user equipment indicates the second user equipment to perform system updating.

S310: The first user equipment establishes a short-range connection to the second user equipment.

Optionally, in S320, the first user equipment exchanges first information with the second user equipment. The first information indicates a PLMN connected to user equipment. For a specific step, refer to step S220 in the foregoing method 200. Details are not described herein again.

It should be noted that, in this embodiment, the first information is exchanged, so that the first user equipment and the second user equipment can learn that the first network and the second network are a same PLMN.

S330: The second user equipment sends first request information to the first user equipment. The first request information is used to initiate a mobility agent request to the first user equipment, and initiating the mobility agent request to the first user equipment may include: requesting the first user equipment to receive information for paging the second user equipment, requesting the first user equipment to indicate the second user equipment to perform location updating, and requesting the first user equipment to indicate the second user equipment to perform system updating. The first request information includes at least one of a first identifier, a second identifier, a paging parameter, and a TA list. For a specific step, refer to step S230 in the foregoing method 200. Details are not described herein again.

S340: After receiving the first request information, the first user equipment determines, based on a service status of the first user equipment, whether to perform the mobility agent.

Specifically, when the first user equipment is in the non-idle state, the first user equipment determines, based on a service executed in a foreground, whether to perform the mobility agent. If service experience is greatly affected after the mobility agent is performed, the first user equipment determines not to perform the mobility agent; or if service experience is slightly affected after the mobility agent is performed, the first user equipment determines to perform the mobility agent.

For example, if executing a service that has a high requirement on a delay and a throughput, for example, a game or AR/VR/XR/MR, the first user equipment does not perform the mobility agent for the second user equipment; or if executing a service such as browsing a web page or using an instant messaging tool to chat, the first user equipment may perform the mobility agent for the second user equipment.

It should be noted that this embodiment of this application is specific to a case in which the first user equipment is in the non-idle state and the first user equipment performs the mobility agent.

S350: The first user equipment sends first response information to the second user equipment. The first response information indicates that the first user equipment accepts the mobility agent request. If the first user equipment does not perform the mobility agent, the first user equipment sends second response information to the second user equipment. The second response information indicates that the first user equipment does not accept the mobility agent request. For a case in which the first user equipment does not accept the mobility agent request, refer to steps S610 to S660 in a method 600 in this application. Details are not described herein.

S360: The second user equipment switches to a power saving mode based on the first response information.

For specific content, refer to step S260 in the method 200. Details are not described herein again.

S370: The first user equipment sends agent configuration information to a base station. The agent configuration information includes an identifier of the second user equipment. Specifically, the agent configuration information indicates, to the base station, that the first user equipment requests to monitor the paging information of the second user equipment.

In a possible implementation, the first user equipment may send the agent configuration information to the base station by using radio resource control (radio resource control, RRC) information.

S380: The base station stores the agent configuration information.

In a possible implementation, after storing the agent configuration information, the base station may explicitly or implicitly indicate, to the first user equipment, whether the agent configuration information has been stored.

Explicitly indicating whether the agent information has been stored means that the base station indicates, by using indication information, whether the agent information has been stored. For example, after the base station receives the agent configuration information sent by the first user equipment, the base station sends feedback information to the first user equipment, where the feedback information indicates whether the configuration information has been stored by the base station.

Implicitly indicating whether the agent information has been stored means that the base station indicates, in a manner of not using indication information, whether the agent information has been stored. For example, the base station and the first user equipment have reached an agreement, where if the base station does not send feedback information to the first user equipment after receiving the agent configuration information sent by the first user information, it indicates that the configuration information has been stored by the base station.

S390: The base station receives first paging information sent by a core network. The first paging information includes an identifier of a paged device.

It should be noted that if identifying that the identifier of the paged device in the first paging information is the same as the identifier of the second user equipment in the agent configuration information, the base station generates second paging information based on the first paging information, and sends the second paging information to the first user equipment, where an identifier of a paged object in the second paging information is the same as the identifier of the paged object in the first paging information; or if identifying that the identifier of the paged device in the first paging information is different from the identifier of the second user equipment in the agent configuration information, the base station does not generate second paging information.

S3100: The first user equipment receives second information. The second information may include at least one of the second paging information, an identifier of a TA to which a camped cell of the first user equipment belongs, and system update indication information.

Specifically, in a possible implementation, the first user equipment receives, on a paging occasion, the second information sent by the base station. The second information includes the second paging information. The paging occasion is determined based on the paging parameter in the first request information. The identifier of the paged object in the second paging information is the same as the identifier of the second user equipment.

In a possible implementation, the first user equipment receives the second information broadcast by a cell of the base station. The second information includes the identifier of the TA to which the camped cell of the first user equipment belongs.

In a possible implementation, the first user equipment receives the second information broadcast by a cell of the base station. The second information includes the system update indication information.

S3110: The first user equipment sends notification information to the second user equipment.

It should be noted that the notification information may only indicate the second user equipment to exit the power saving mode and receive information from the second network. The second user equipment determines a next action based on the information from the second network. The information from the second network may be forwarded by the first user equipment to the second user equipment by using the notification information, or may be obtained by the second user equipment from the second network. This is not limited in this application. The notification information may alternatively indicate a next action of the second user equipment, and the next action is determined based on the second information.

In a possible implementation, the notification information may indicate the second user equipment to receive the information from the second network, and the second user equipment determines the next action based on the information from the second network.

For example, the first user equipment receives the second information, and if the second information includes the second paging information, the first user equipment sends the notification information to the second user equipment.

The first user equipment receives the second information. If the second information includes information about the identifier of the TA to which the camped cell of the first user equipment belongs, the first user equipment determines whether the TA list in the first request information includes the identifier of the TA to which the camped cell of the first user equipment belongs. If the first user equipment determines that the TA list in the first request information does not include the identifier of the TA to which the camped cell of the first user equipment belongs, the first user equipment sends the notification information to the second user equipment; or if the first user equipment determines that the TA list in the first request information includes the identifier of the TA to which the camped cell of the first user equipment belongs, the first user equipment does not send the notification information to the second user equipment.

The first user equipment receives the second information, and if the second information includes the system update information, the first user equipment sends the notification information to the second user equipment.

In a possible implementation, the notification information may indicate the second user equipment to perform the next action.

For example, when detecting the second paging information, the first user equipment sends first notification information to the second user equipment, to indicate the second user equipment to respond to the paging.

When determining that the base station is not in the TA list in the first request information, the first user equipment sends second notification information to the second user equipment, to indicate the second user equipment to update the TA list.

When determining that a system message changes, the first user equipment sends third notification information to the second user equipment, to indicate the second user equipment to update a system.

It should be noted that, in another possible implementation, when the first user equipment determines that the system message changes, the first user equipment directly sends an updated system message to the second user equipment. In this manner, the first user equipment does not need to send the third notification information, and the second user equipment does not need to perform an action described in S3120, to be specific, does not need to exit the power saving mode or perform an action of reading the system message sent by a network, thereby reducing power consumption.

S3120: The second user equipment exits the power saving mode based on the notification information, and performs a related operation.

If the notification information only indicates the second user equipment to exit the power saving mode and receive the information from the second network, where the information from the second network may be forwarded by the first user equipment to the second user equipment by using the notification information, or may be obtained by the second user equipment from the second network, which is not limited in this application, the second user equipment determines the next action based on the information from the second network; or if the notification information indicates the next action of the second user equipment, the second user equipment performs the related operation in the notification information.

Specifically, if the second user equipment receives the first notification information, the second user equipment responds to the paging; if the notification information indicates that the second user equipment receives the second notification information, the second user equipment updates the TA list; or if the second user equipment receives the third notification information, the second user equipment updates the system message.

In a possible implementation, if the notification information includes the second notification information, the second user equipment updates the TA list, the second user equipment sends an updated TA list, and the first user equipment monitors, based on the updated TA list, the information for paging the second user equipment.

It should be noted that if the first user equipment does not send the notification information to the second user equipment, the second user equipment keeps in the power saving mode.

In this embodiment of this application, the second user equipment and the first user equipment use a communication system of a same operator. When the second network does not send information to the second user equipment, the second user equipment may enter the power saving mode, to reduce power consumption of the second user equipment and prolong standby duration of the second user equipment. When the second network sends information to the second user equipment, the first user equipment performs monitoring and notifies the second user equipment, to ensure that the second user equipment does not miss the information and improve communication reliability.

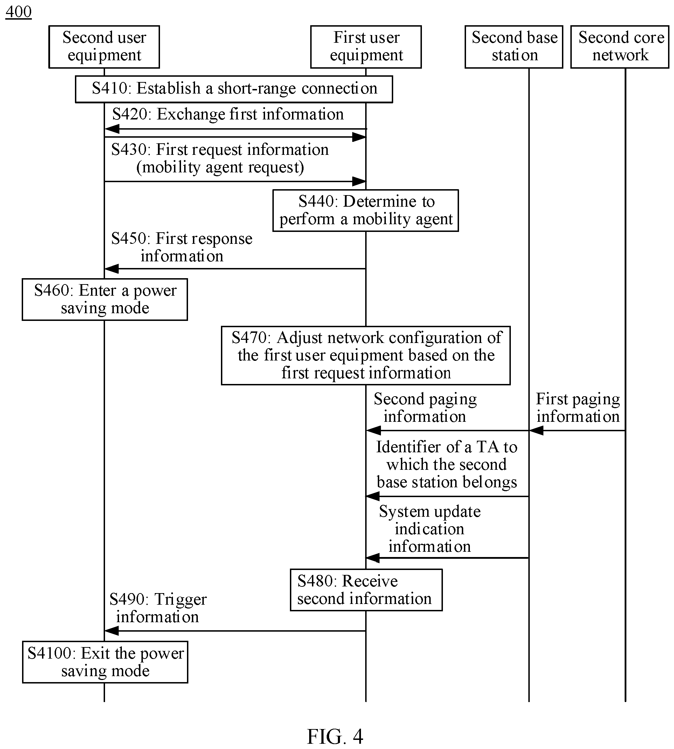

FIG. 4 is a schematic flowchart of a method 400 according to an embodiment of this application. It should be noted that, for ease of description, in this embodiment of this application, a PLMN with which first user equipment is registered is referred to as a first network, and a PLMN with which second user equipment is registered is referred to as a second network. In this embodiment of this application, a first base station and a first core network are a base station and a core network in the first network, a second base station and a second core network are a base station and a core network in the second network, the first network is different from the second network, and the first user equipment is in an idle state.

It should be noted that, in this embodiment of this application, the first user equipment is in the idle mode, and does not exchange information with the first network. Therefore, the first base station and the first core network are omitted in the figure.

It should be noted that, for a case in which the first network is different from the second network and the first user equipment is in a non-idle state, refer to a method 500 in this application. Details are not described herein.

For example, in this embodiment of this application, the first user equipment is a mobile phone, and the second user equipment is a wearable product having a communication function.

It should be noted that, in this embodiment of this application, that the first user equipment is in the first network may include that the first user equipment is registered with the first network, and that the second user equipment is in the second network may include that the second user equipment is registered with the second network.

It should be noted that, in this embodiment of this application, a mobility agent includes: The first user equipment receives paging information in place of the second user equipment, the first user equipment indicates the second user equipment to perform location updating, and the first user equipment indicates the second user equipment to perform system updating.

S410: The first user equipment establishes a short-range connection to the second user equipment.

Optionally, in S420, the first user equipment exchanges first information with the second user equipment. The first information indicates a PLMN connected to user equipment.

For example, the first information may include an identifier of the PLMN. Specifically, the identifier of the PLMN may include an MCC and an MNC.

In a possible implementation, both the first user equipment and the second user equipment send the first information to each other. In this implementation, the first user equipment may actively send the first information of the first user equipment to the second user equipment, or may send the first information of the first user equipment to the second user equipment after receiving request information of the second user equipment; and the second user equipment may actively send the first information of the second user equipment to the first user equipment, or may send the first information of the second user equipment to the first user equipment after receiving request information of the first user equipment.

In a possible implementation, the first user equipment and the second user equipment receive the first information sent by a network device. For example, a first server sends the first information of the second user equipment to the first user equipment, and the first server sends the first information of the first user equipment to the second user equipment. The first user equipment and the second user equipment are registered with the first server.

In a possible implementation, the second user equipment obtains an identifier of the first network in the first information sent by the first user equipment, and if the second user equipment determines that the identifier of the first network is different from an identifier of the second network, first request information indicates that the identifier of the first network is different from the identifier of the second network; or if the second user equipment determines that the identifier of the first network is the same as an identifier of the second network, refer to step S220 in the method 200 and step S320 in the method 300. Details are not described herein again.

The first request information may explicitly indicate that the identifier of the first network is different from the identifier of the second network.

For example, the first request information includes one data bit. If the identifier of the first network is different from the identifier of the second network, the data bit is 0.

For example, the first request information includes one piece of indication information. If the identifier of the first network is different from the identifier of the second network, the indication information is False.

The first request information may implicitly indicate that the identifier of the first network is different from the identifier of the second network.

For example, if the first request information includes information about a camped cell of the second user equipment or information about a camped frequency of the second user equipment, it implicitly indicates that the identifier of the first network is different from the identifier of the second network.

In a possible implementation, the first user equipment obtains the identifier of the second network in the first information sent by the second user equipment, and if determining that the second network is different from the first network, the first user equipment replies the identifier of the first network; or if the first user equipment determines that the second network is the same as the first network, refer to step S220 in the method 200 and step S320 in the method 300. Details are not described herein again.

It should be noted that, in this embodiment, the first information is exchanged, so that the first user equipment and the second user equipment can learn that the first network and the second network are different PLMNs.

S430: The second user equipment sends the first request information to the first user equipment. The first request information is used to initiate a mobility agent request to the first user equipment, and initiating the mobility agent request to the first user equipment may include: requesting the first user equipment to receive information for paging the second user equipment, requesting the first user equipment to indicate the second user equipment to perform location updating, and requesting the first user equipment to indicate the second user equipment to perform system updating. The first request information may include a first identifier, a second identifier, a paging parameter, a TA list, the camped cell of the second user equipment, and the camped frequency of the second user equipment.

The first identifier is the identifier of the second network. The second identifier is an identifier of the second user equipment. For example, the second identifier may be an S-TMSI. The paging parameter includes a PO and a PF. The TA list is used by the first user equipment to notify the second user equipment to update the TA when the first user equipment determines that the first user equipment is located outside an area described in the TA list.

For example, the area described in the TA list includes A, B, and C, the first user equipment moves to an area D, and the area D does not belong to the TA list. In this case, the first user equipment may notify the second user equipment to update the TA list, and the second user equipment adds the area D to the TA list.

It should be noted that one or more of the first identifier, the second identifier, the paging parameter, the TA list, the camped cell of the second user equipment, and the camped frequency of the second user equipment may be pre-stored in the first user equipment, and therefore do not need to be delivered.

For example, the first user equipment may store a first mapping relationship, to be specific, one piece of second identifier information corresponds to one parameter group, and the parameter group includes one or more of the first identifier, the TA list, the paging parameter, the camped cell of the second user equipment, and the camped frequency of the second user equipment, so that the first request information only needs to carry the second identifier.

For example, the first user equipment may store a second mapping relationship, to be specific, the TA list corresponds to one parameter group, and the parameter group includes one or more of the paging parameter, the first identifier, the camped cell of the second user equipment, and the camped frequency of the second user equipment, so that the first request information only needs to carry the second identifier and the TA list.

In this embodiment of this application, the first request information may be generated after the second user equipment receives the first information sent by the first user equipment, or may be directly generated when the second user equipment does not exchange the first information with the first user equipment.

In a possible implementation, the second user equipment receives the first information sent by the first user equipment, the second user equipment obtains the identifier of the first network from the first information, the second user equipment determines that the identifier of the first network is different from the identifier of the second network, and the second user equipment generates the first request information.

In a possible implementation, if the first user equipment and the second user equipment do not exchange the first information, the second user equipment directly generates the first request information.

It should be noted that the first request information in this embodiment of this application may be generated and sent at a time, or may be generated and sent for a plurality of times. This is not limited in this application.

For example, that the first request information is generated and sent for the plurality of times includes: The second user equipment first sends the first identifier, the second identifier, the paging parameter, and the TA list to the first user equipment. The first user equipment determines, based on the first network and the first identifier, that the second user equipment is different from the first network. The first user equipment sends indication information to the second user equipment to indicate a determining result. The second user equipment then sends the camped cell of the second user equipment and the camped frequency of the second user equipment to the first user equipment based on the determining result. In a possible case, the indication information further indicates the first network.

S440: After receiving the first request information, the first user equipment determines, based on a service status of the first user equipment, whether to perform the mobility agent. Specifically, when the first user equipment is in the idle state, the first user equipment determines to perform the mobility agent. When the first user equipment is in the non-idle state, refer to step S540 in a method 500. Details are not described herein.

It should be understood that, in this embodiment of this application, the first user equipment is in the idle mode, and the first user equipment performs the mobility agent.

S450: The first user equipment sends first response information to the second user equipment. The first response information indicates that the second user equipment has accepted the mobility agent request. For a case in which the first user equipment does not perform the mobility agent, refer to steps S610 to S660 in a method 600 in this application. Details are not described herein.

S460: The second user equipment switches to a power saving mode based on the first response information.

For specific content, refer to step S260 in the foregoing method 200. Details are not described herein again.

S470: The first user equipment hands over from the first network to the second network based on the first request information, and camps on a first frequency or a first cell. The first frequency or the first cell is a frequency or a cell that is able to receive the information for paging the second user equipment. The first frequency is the camped frequency of the second user equipment or a frequency in the TA list of the second user equipment, and the first cell is the camped cell of the second user equipment or a cell in the TA list of the second user equipment. The first user equipment may quickly position, based on the first frequency or the first cell, a frequency or a cell that is able to receive the information for paging the second user equipment.

It should be noted that, in this embodiment of this application, there is no time sequence between sending the first response information and adjusting network configuration of the first user equipment by the first user equipment. The first user equipment may first send the first response information and then adjust the network configuration, or may first adjust the network configuration and then send the first response information, or may simultaneously send the first response information and adjust the network configuration. This is not limited in this application.

It should be noted that the first user equipment hands over a PLMN only on a paging occasion of the second user equipment, and camps on the first frequency or the first cell. When the first user equipment is not on the paging occasion of the second user equipment, the first user equipment continues to perform another service on a PLMN with which the first user equipment is originally registered.

It should be noted that, if a paging occasion of the first user equipment is the same as the paging occasion of the second user equipment, a base station of the first user equipment negotiates a paging occasion with a base station of the second user equipment, to enable the paging occasion of the first user equipment to be different from the paging occasion of the second user equipment. If the negotiation between the base station of the first user equipment and the base station of the second user equipment fails, the first user equipment sends indication information to the second user equipment. The indication information indicates that the first user equipment does not agree to receive the information for paging the second user equipment.

In a possible implementation, the indication information may further indicate that a reason for disagreement is a paging occasion conflict.

S480: The first user equipment receives second information. For a specific step, refer to step S270 in the method 200 in this application. Details are not described herein again. It should be noted that the base station in step S270 is the second base station in the method 400 in this embodiment of this application, and the core network in step S270 is the second core network in the method 400 in this embodiment of this application.

S490: The first user equipment sends notification information to the second user equipment. The notification information indicates the second user equipment to exit the power saving mode. For a specific step, refer to step S280 in the method 200 in this application. Details are not described herein again. It should be noted that the base station in step S280 is the second base station in the method 400 in this embodiment of this application, and the core network in step S280 is the second core network in the method 400 in this embodiment of this application.

S4100: The second user equipment exits the power saving mode based on the notification information, and performs a related operation. For a specific step, refer to step S290 in the method 200 in this application. Details are not described herein again. It should be noted that the base station in step S290 is the second base station in the method 400 in this embodiment of this application, and the core network in step S290 is the second core network in the method 400 in this embodiment of this application.

In this embodiment of this application, the second user equipment and the first user equipment use communication systems of different operators. When the second network does not send information to the second user equipment, the second user equipment may disable some modules, to reduce power consumption of the second user equipment and prolong standby duration of the second user equipment. When the second network sends information to the second user equipment, the first user equipment performs monitoring and notifies the second user equipment, to ensure that the second user equipment does not miss the information and improve communication reliability.

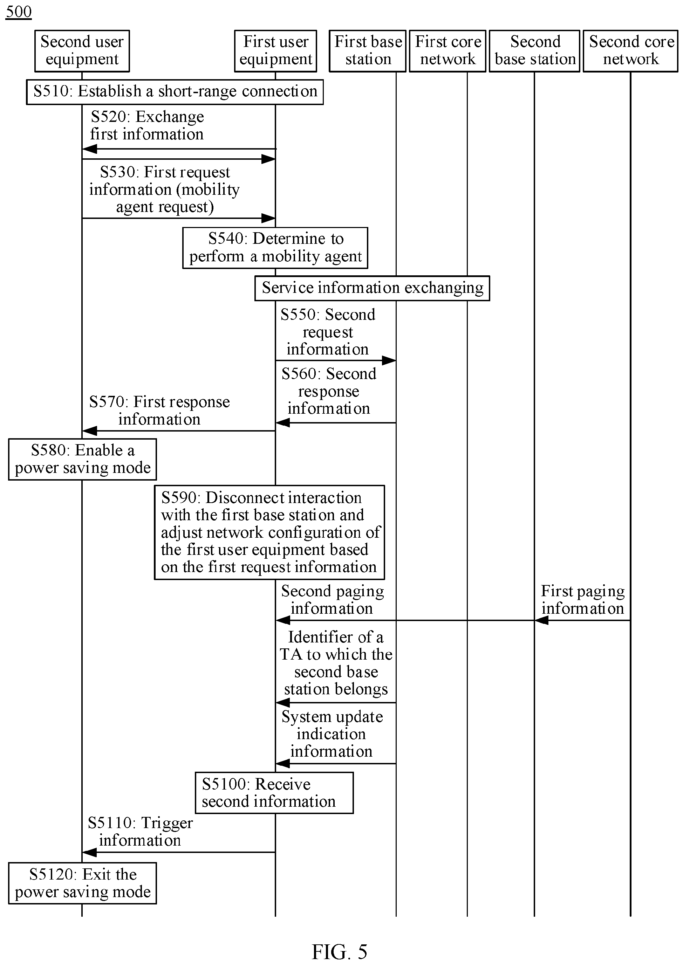

FIG. 5 is a schematic flowchart of a method 500 according to an embodiment of this application. It should be noted that, for ease of description, in this embodiment of this application, a PLMN with which first user equipment is registered is referred to as a first network, and a PLMN with which second user equipment is registered is referred to as a second network. In this embodiment of this application, a first base station and a first core network are a base station and a core network in the first network, a second base station and a second core network are a base station and a core network in the second network, the first network is different from the second network, and the first user equipment is in a non-idle state.

For example, in this embodiment of this application, the first user equipment is a mobile phone, and the second user equipment is a wearable product having a communication function.

It should be noted that, in this embodiment of this application, that the first user equipment is in the first network may include that the first user equipment is registered with the first network, and that the second user equipment is in the second network may include that the second user equipment is registered with the second network.

It should be noted that, in this embodiment of this application, a mobility agent includes: The first user equipment receives paging information in place of the second user equipment, the first user equipment indicates the second user equipment to perform location updating, and the first user equipment indicates the second user equipment to perform system updating.

S510: The first user equipment establishes a short-range connection to the second user equipment.

Optionally, in S520, the first user equipment exchanges first information with the second user equipment. The first information indicates a PLMN connected to user equipment. For a specific step, refer to step S420 in the foregoing method 400. Details are not described herein again.

It should be noted that, in this embodiment, the first information is exchanged, so that the first user equipment and the second user equipment can learn that the first network and the second network are different PLMNs.

S530: The second user equipment sends first request information to the first user equipment. The first request information is used to initiate a mobility agent request to the first user equipment, and initiating the mobility agent request to the first user equipment may include: requesting the first user equipment to receive information for paging the second user equipment, requesting the first user equipment to indicate the second user equipment to perform location updating, and requesting the first user equipment to indicate the second user equipment to perform system updating. For a specific step, refer to step S430 in the foregoing method 400. Details are not described herein again.

S540: The first user equipment determines, based on a service status of the first user equipment and the first request information, whether to perform the mobility agent.

For a specific step, refer to step S340 in the foregoing method 300. Details are not described herein again.

It should be understood that, in this embodiment of this application, the method 500 is for a case in which the first user equipment performs the mobility agent and is in the non-idle state.

S550: The first user equipment sends second request information to the second base station. The second request information is used to request the first user equipment to enter an idle state in a first time period, and the first time period is determined based on a paging parameter of the second user equipment. For example, the first time period includes a paging occasion of the second user equipment.

When the first user equipment enters the idle state in the first time period, the first network stops sending information to the first user equipment in the first time period. For example, the second request information is used to request GAP information, and the second request information includes an identifier of the second user equipment and the paging parameter of the second user equipment.

In a possible implementation, the first user equipment may send the second request information to the second base station by using RRC information.

It should be noted that, because the first user equipment is in the non-idle state, information exchange exists between the first user equipment, the first base station, and the first core network.

It should be noted that, when the first user equipment is not in the first time period, the first network may send information to the first user equipment.

S560: The first base station sends second response information to the first user equipment. The second response information indicates the first user equipment to enter the idle state in the first time period, and the first time period is determined based on the paging parameter of the second user equipment. For example, the second response information includes the GAP information.

S570: The first user equipment sends first response information to the second user equipment. The first response information indicates that the second user equipment accepts the mobility agent request. For a case in which the first user equipment does not perform the mobility agent, refer to steps S610 to S660 in a method 600 in this application.

S580: The second user equipment switches to a power saving mode based on the first response information.

For specific content, refer to step S260 in the foregoing method 200. Details are not described herein again.

S590: The first user equipment disconnects interaction with the first base station, hands over from the first network to the first network based on the first request information, and camps on a first frequency or a first cell. The first frequency is a camped frequency of the second user equipment or a frequency in a TA list of the second user equipment, and the first cell is a camped cell of the second user equipment or a cell in the TA list of the second user equipment. The first user equipment may quickly position, based on the first frequency or the first cell, a frequency or a cell that is able to receive the information for paging the second user equipment.

It should be noted that, in this embodiment of this application, there is no time sequence between sending the first response information and adjusting network configuration of the first user equipment by the first user equipment. The first user equipment may first send the first response information and then adjust the network configuration, or may first adjust the network configuration and then send the first response information, or may simultaneously send the first response information and adjust the network configuration. This is not limited in this application.

It should be noted that the first user equipment hands over a PLMN only on the paging occasion of the second user equipment, and camps on the first frequency or the first cell. When the first user equipment is not on the paging occasion of the second user equipment, the first user equipment continues to perform another service on a PLMN with which the first user equipment is originally registered.

It should be noted that, if a paging occasion of the first user equipment is the same as the paging occasion of the second user equipment, a base station of the first user equipment negotiates a paging occasion with a base station of the second user equipment, to enable the paging occasion of the first user equipment to be different from the paging occasion of the second user equipment. If the negotiation between the base station of the first user equipment and the base station of the second user equipment fails, the first user equipment sends indication information to the second user equipment. The indication information indicates that the first user equipment does not agree to receive the information for paging the second user equipment.

In a possible implementation, the indication information further indicates that a reason for disagreement is a paging occasion conflict.

It should be noted that, in this embodiment of this application, there is no time sequence between sending the first response information and adjusting the network configuration of the first user equipment by the first user equipment. The first user equipment may first send the first response information and then adjust the network configuration, or may first adjust the network configuration and then send the first response information, or may simultaneously send the first response information and adjust the network configuration. This is not limited in this application.

S5100: The first user equipment receives second information.

For a specific step, refer to step S270 in the method 200 in this application. Details are not described herein again. It should be noted that the base station in step S270 is the second base station in the method 500 in this embodiment of this application, and the core network in step S270 is the second core network in the method 500 in this embodiment of this application.

S5110: The first user equipment sends notification information to the second user equipment. The notification information indicates the second user equipment to exit the power saving mode.

For a specific step, refer to step S280 in the method 200 in this application. Details are not described herein again. It should be noted that the base station in step S280 is the second base station in the method 500 in this embodiment of this application, and the core network in step S280 is the second core network in the method 500 in this embodiment of this application.

S5120: The second user equipment exits the power saving mode based on the notification information, and performs a related operation.

For a specific step, refer to step S290 in the method 200 in this application. Details are not described herein again. It should be noted that the base station in step S290 is the second base station in the method 500 in this embodiment of this application, and the core network in step S290 is the second core network in the method 500 in this embodiment of this application.

In this embodiment of this application, the second user equipment and the first user equipment use communication systems of different operators. When the second network does not send information to the second user equipment, the second user equipment may disable some modules, to reduce power consumption of the second user equipment and prolong standby duration of the second user equipment. When the second network sends information to the second user equipment, the first user equipment performs monitoring and notifies the second user equipment, to ensure that the second user equipment does not miss the information and improve communication reliability.

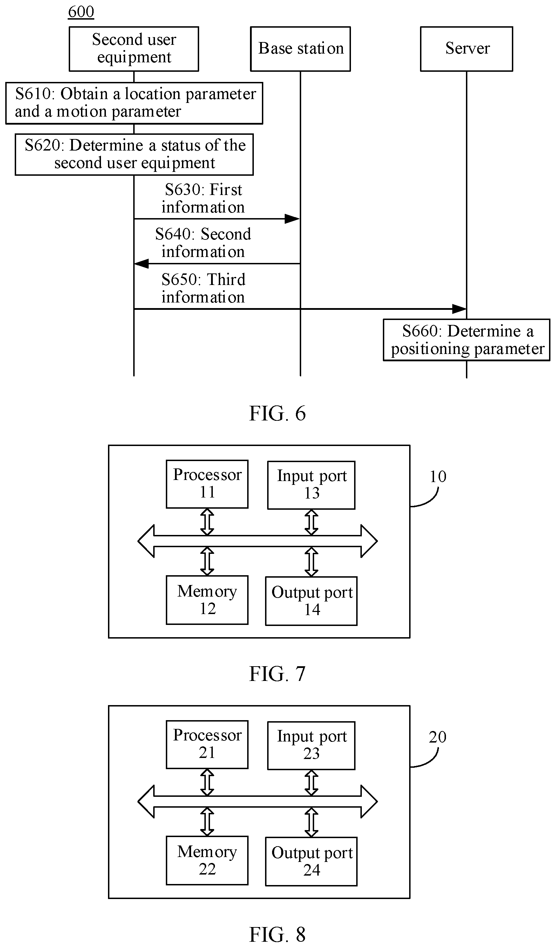

FIG. 6 is a schematic flowchart of a method 600 according to an embodiment of this application. It should be noted that this embodiment of this application is for a case in which no mobility agent is performed, and this embodiment of this application is performed by the second user equipment in the foregoing methods 200 to 500.

For example, in this embodiment of this application, first user equipment is a mobile phone, and the second user equipment is a wearable product having a communication function.

It should be noted that, in a possible implementation, in the foregoing methods 200 to 500, if the first user equipment does not perform the mobility agent, the first user equipment indicates the second user equipment not to accept a mobility agent request. A manner in which the first user equipment indicates the second user equipment not to accept the mobility agent request is not limited in this embodiment of this application. For example, the first user equipment implicitly indicates the second user equipment by not sending information to the second user equipment, or the first user equipment explicitly indicates the second user equipment by sending indication information to the second user equipment. The second user equipment in the foregoing methods 200 to 500 is the second user equipment in the method 600 in this embodiment of this application.

It should be noted that, in this embodiment of this application, the mobility agent may include: The first user equipment receives paging information in place of the second user equipment, the first user equipment indicates the second user equipment to perform location updating, and the first user equipment indicates the second user equipment to perform system updating. In this embodiment of this application, the mobility agent mainly means that the first user equipment receives information for paging the second user equipment.

S610: Obtain a location parameter and a motion parameter of the second user equipment. The location parameter is used to describe location information of the second user equipment. For example, the location parameter may be a global positioning system (Global Positioning System, GPS) parameter of the second user equipment. The motion parameter is used to describe motion information of the second user equipment. For example, the motion parameter may be data of sensors such as a gravity meter and an accelerometer of the second user equipment.

S620: Determine a status of the second user equipment based on the location parameter and the motion parameter.

Specifically, the status of the second user equipment includes a static state and a non-static state. The static state includes an absolute static state and a micro-motion state.

S630: Send first information to a base station. The first information is used by the base station to determine a communication parameter of the second user equipment.

For example, the second user equipment may send the first information to the base station by using RRC information.

In a possible implementation, the first information includes the status of the second user equipment, and the base station determines the communication parameter based on the status of the second user equipment.

In another possible implementation, the second user equipment stores a first correspondence, and the first correspondence is a correspondence between status information of the second user equipment and a communication parameter type. The second user equipment determines the communication parameter type based on the status information, and sends the communication parameter type to the base station by using the first information.

Specifically, if determining that the second user equipment is in the static state, the second user equipment sends the first information to the base station, where the first information indicates the base station to configure a communication parameter whose type is power saving for the second user equipment; or if determining that the second user equipment is in the non-static state, the second user equipment sends the first information to the base station, where the first information indicates the base station to configure a communication parameter whose type is regular for the second user equipment.

The communication parameter includes a discontinuous reception (discontinuous reception, DRX) cycle, a measurement list, and BWP configuration.

The communication parameter whose type is power saving may be a DRX cycle with long time, and the measurement list includes a small quantity of measurement targets and information about more power-saving BWP configuration.

S640: The base station sends second information to the second user equipment. The second information includes the communication parameter configured by the base station for the second user equipment.

S650: Send third information to a server. The third information is used by the server to determine a positioning parameter of the second user equipment.

For example, the second user equipment may send the third information to the server by using RRC information.

In a possible implementation, the third information includes the status of the second user equipment, and the server determines the positioning parameter based on the status of the second user equipment.

In another possible implementation, the second user equipment stores a second correspondence, and the second correspondence is a correspondence between status information of the second user equipment and a positioning parameter type. The second user equipment determines the positioning parameter type based on the status information, and sends the positioning parameter type to the server by using the first information.

Specifically, if the second user equipment determines that the second user equipment is in the static state, the third information indicates the server to configure a positioning parameter whose type is power saving for the second user equipment; or if the second user equipment determines that the second user equipment is in the non-static state, the third information indicates the server to configure a positioning parameter whose type is regular for the second user equipment.

The positioning parameter includes a positioning periodicity and a positioning frequency.

The positioning parameter whose type is power saving may be a positioning periodicity with long time and a positioning frequency with a small quantity of times.

S660: The server configures the positioning parameter based on the third information.

In this embodiment of this application, the communication parameter and the positioning parameter may be set more flexibly based on location information and a motion status of user equipment, and a parameter with lower power consumption is used in the static state, thereby increasing standby duration of the user equipment.

It should be noted that in this embodiment of this application, there is no time sequence between steps S630 and S640 and steps S650 and S660, and steps S630 and S640 and steps S650 and S660 are parallel.

It should be understood that the location information and the motion status in this embodiment of this application are examples, and in actual application, other information may be further included. This is not limited in this application. For example, a parameter may be set based on time, and a parameter with lower power consumption is used during sleeping at night.

It should be noted that these parameters are generally related before. For example, the motion status is static, and the location information is a fixed place; and the motion status is static during sleep time.

It should be noted that a specific manner of determining the parameter is not limited in this embodiment of this application.

In a possible implementation, a mapping relationship is preconfigured in a network device or user equipment, and the parameter is determined based on the mapping relationship.

In a possible implementation, the method may be implemented by using a neural network. The user equipment records usage of the user equipment in previous different states, and trains a neural network model by using data. The user equipment inputs determined location information and/or a determined motion status into the neural network model to obtain a corresponding configuration parameter. In addition, the neural network model may be synchronously updated and learned.

According to the foregoing method, FIG. 7 is a diagram of a communication apparatus 10 according to an embodiment of this application. As shown in FIG. 7, the apparatus 10 may be user equipment (for example, the foregoing first user equipment), or may be a chip or a circuit, for example, a chip or a circuit that may be disposed in the user equipment. The user equipment may correspond to the user equipment in the foregoing method.

The apparatus 10 may include a processor 11 (in other words, an example of a processing unit) and a memory 12. The memory 12 is configured to store instructions. The processor 11 is configured to execute the instructions stored in the memory 12, to enable the apparatus 20 to implement the steps performed by the user equipment (for example, the first user equipment) in the methods corresponding to FIG. 2 to FIG. 6.

Further, the apparatus 10 may further include an input port 13 (in other words, an example of a communication unit) and an output port 14 (in other words, another example of the communication unit). Further, the processor 11, the memory 12, the input port 13, and the output port 14 may communicate with each other by using internal connection paths, to transmit a control and/or data signal. The memory 12 is configured to store a computer program. The processor 11 may be configured to invoke the computer program from the memory 12 and run the computer program, to control the input port 13 to receive a signal, and control the output port 14 to send a signal, to implement the steps performed by the user equipment in the foregoing method. The memory 12 may be integrated into the processor 11, or the memory 12 and the processor 11 may be disposed separately.

Optionally, if the apparatus 10 is user equipment, the input port 13 is a receiver, and the output port 14 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 10 is a chip or a circuit, the input port 13 is an input interface, and the output port 14 is an output interface.

In an implementation, it may be considered that functions of the input port 13 and the output port 14 are implemented through a transceiver circuit or a dedicated transceiver chip. It may be considered that the processor 11 is implemented through a dedicated processing chip, a processing circuit, a processor, or a general-purpose chip.

In another implementation, it may be considered that the user equipment provided in this embodiment of this application is implemented by using a general-purpose computer. To be specific, program code for implementing functions of the processor 11, the input port 13, and the output port 14 are stored in the memory 12, and the general-purpose processor implements the functions of the processor 11, the input port 13, and the output port 14 by executing the code in the memory 12.

The functions and actions of the modules or the units of the communication apparatus 10 that are listed above are only examples for description. The modules or the units of the communication apparatus 10 may be configured to perform the actions or the processing processes performed by the user equipment in the foregoing method 200. Herein, to avoid repetition, a detailed description thereof is omitted.

For concepts, explanations, and detailed descriptions used by the apparatus 10 and related to the technical solutions provided in this embodiment of this application and other steps, refer to the descriptions of the content in the foregoing method or other embodiments. Details are not described herein again.

According to the foregoing method, FIG. 8 is a diagram of a communication apparatus 20 according to an embodiment of this application. As shown in FIG. 8, the apparatus 20 may be a network device (for example, the foregoing second base station), or may be a chip or a circuit, for example, a chip or a circuit that may be disposed in the network device. The network device corresponds to the network device (for example, the foregoing second base station) in the foregoing methods.

The apparatus 20 may include a processor 21 (in other words, an example of a processing unit) and a memory 22. The memory 22 is configured to store instructions. The processor 21 is configured to execute the instructions stored in the memory 22, to enable the apparatus 20 to implement the steps performed by the network device (for example, the second base station) in the methods corresponding to FIG. 2 to FIG. 6.

Further, the apparatus 20 may further include an input port 23 (an example of a communication unit) and an output port 24 (another example of the processing unit). Further, the processor 21, the memory 22, the input port 23, and the output port 24 may communicate with each other by using internal connection paths, to transmit a control and/or data signal. The memory 22 is configured to store a computer program. The processor 21 may be configured to invoke the computer program from the memory 22 and run the computer program, to control the input port 23 to receive a signal, and control the output port 24 to send a signal, to complete the steps of the network device in the foregoing method 200 to the method 600. The memory 22 may be integrated into the processor 21, or the memory 22 and the processor 21 may be disposed separately.

Optionally, if the apparatus 20 is a network device, the input port 23 is a receiver, and the output port 24 is a transmitter. The receiver and the transmitter may be a same physical entity or different physical entities. When the receiver and the transmitter are the same physical entity, the receiver and the transmitter may be collectively referred to as a transceiver.

Optionally, if the apparatus 20 is a chip or a circuit, the input port 23 is an input interface, and the output port 24 is an output interface.

Optionally, if the apparatus 20 is the chip or the circuit, the apparatus 20 may not include the memory 22, and the processor 21 may read instructions (a program or code) in a memory outside the chip to implement the function of the network device in the foregoing methods corresponding to FIG. 2 to FIG. 6.

In an implementation, it may be considered that functions of the input port 23 and the output port 24 are implemented through a transceiver circuit or a dedicated transceiver chip. It may be considered that the processor 21 is implemented through a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 21, the input port 23, and the output port 24 is stored in the memory, and the general-purpose processor implements the functions of the processor 21, the input port 23, and the output port 24 by executing the code in the memory.

The modules or the units of the communication apparatus 20 may be configured to perform the actions or the processing processes performed by the network device in the foregoing method 200 to the method 600. Herein, to avoid repetition, a detailed description thereof is omitted.

For concepts, explanations, detailed descriptions, and other steps of the apparatus 20 that are related to the technical solutions provided in embodiments of this application, refer to the descriptions of the content in the foregoing methods or other embodiments. Details are not described herein again.

According to the method provided in embodiments of this application, embodiments of this application further provide a communication system, and the communication system includes the network device and one or more pieces of user equipment.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall be subject to the protection scope of the claims.

## Claims

1. A communication method, applied to first user equipment, and comprising:
receiving first request information sent by second user equipment, wherein the first request information is used to request the first user equipment to receive information sent by a second network for paging the second user equipment; and
in response to receiving the information sent by the second network for paging the second user equipment, sending, to the second user equipment, information indicating the second user equipment to respond to paging of the second network.

2. The method according to claim 1, wherein the first request information comprises:
an identifier of the second user equipment and a paging parameter of the second user equipment.

3. The method according to claim 2, wherein the first request information comprises:
information about a camped frequency of the second user equipment or information about a camped cell of the second user equipment.

4. The method according to claim 2, wherein the first request information further comprises an identifier of the second network, and if the identifier of the second network is different from an identifier of a first network, the method further comprises:
sending, to the second user equipment, a request for information about a camped frequency of the second user equipment or information abouta camped cell of the second user equipment.

5. The method according to claim 2, wherein before the receiving first request information, the method further comprises:
sending an identifier of a first network to the second user equipment, wherein the first user equipment is in the first network; and
if the identifier of the first network is the same as an identifier of the second network, the first request information indicates that the identifier of the first network is the same as the identifier of the second network;
if the identifier of the first network is the same as an identifier of the second network, the first request information further comprises the identifier of the second network; or
if the identifier of the first network is different from an identifier of the second network, the first request information further comprises the identifier of the second network, information about a camped frequency of the second user equipment, and information about a camped cell of the second user equipment.

6. The method according to claim 3 or 4, wherein after the receiving first request information sent by second user equipment, if the first user equipment is in an idle state, the method further comprises:
if the identifier of the first network is different from the identifier of the second network, camping, by the first user equipment, on a first frequency or a first cell in the second network, and receiving, based on the paging parameter, the information broadcast by the second network for paging the second user equipment, wherein the first frequency or the first cell is a frequency or a cell that is able to receive the information for paging the second user equipment; or
if the identifier of the first network is the same as the identifier of the second network, receiving, based on the paging parameter, the information broadcast by the second network for paging the second user equipment.

7. The method according to any one of claims 2 to 4, wherein after the receiving first request information sent by second user equipment, if the first user equipment is in a non-idle state, the method further comprises:
if the identifier of the first network is the same as the identifier of the second network, sending first information to the first network, wherein the first information comprises the identifier of the second user equipment, and the first information indicates the second network to send, to the first user equipment, the information for paging the second user equipment.

8. The method according to any one of claims 2 to 4, wherein after the receiving first request information sent by second user equipment, if the first user equipment is in a non-idle state, the method further comprises:
if the identifier of the first network is different from the identifier of the second network, sending second request information to the first network, wherein the second request information is used to request the first network to suspend, in a first time period, sending information to the first user equipment, and the first time period is determined based on the paging parameter of the second user equipment.

9. The method according to claim 8, wherein the method further comprises:
if the first user equipment camps on a second frequency or a second cell in the second network in the first time period, and the second frequency or the second cell is a frequency or a cell that is able to receive the information for paging the second user equipment, receiving the information broadcast by the second network for paging the second user equipment.

10. The method according to claim 8 or 9, wherein the method further comprises:
determining, based on a service executed by the first user equipment, whether or not to receive the information sent by the second network for paging the second user equipment; and
if the first user equipment determines to receive the information sent by the second network for paging the second user equipment, sending first response information to the second user equipment; or
if the first user equipment determines not to receive the information sent by the second network for paging the second user equipment, sending second response information to the second user equipment.

11. The method according to any one of claims 1 to 10, wherein the first request information further comprises:
a tracking area list of the second user equipment.

12. The method according to claim 11, wherein after the receiving first request information sent by second user equipment, if the identifier of the first network is the same as the identifier of the second network, the method further comprises:
receiving, by the first user equipment, a first tracking area identity broadcast by the second network, and if the tracking area list does not comprise the first tracking area identity, sending, by the first user equipment to the second user equipment, information indicating the second user equipment to update the tracking area list.

13. The method according to claim 11, wherein after the receiving first request information sent by second user equipment, if the identifier of the first network is different from the identifier of the second network, the method further comprises:
receiving, by the first user equipment, a second tracking area identity broadcast by the first network, and if the tracking area list does not comprise the second tracking area identity, sending, by the first user equipment to the second user equipment, information indicating the second user equipment to update the tracking area list.

14. A communication method, applied to second user equipment, wherein the method comprises:
sending first request information to first user equipment, wherein the first request information is used to request the first user equipment to receive information sent by a second network for paging the second user equipment;
receiving, from the first user equipment, information indicating the second user equipment to respond to paging of the second network; and
responding to the paging of the second network.

15. The method according to claim 14, wherein the first request information comprises:
an identifier of the second user equipment and a paging parameter of the second user equipment.

16. The method according to claim 15, wherein the first request information comprises:
information about a camped frequency of the second user equipment or information about a camped cell of the second user equipment.

17. The method according to claim 15, wherein the first request information further comprises an identifier of the second network, and if the identifier of the second network is different from an identifier of a first network, the method further comprises:
in response to receiving a request sent by the first user equipment for information about a camped frequency of the second user equipment or information about a camped cell of the second user equipment, sending the information about the camped frequency of the second user equipment or the information about the camped cell of the second user equipment to the first user equipment.

18. The method according to claim 15, wherein before the sending first request information to first user equipment, the method further comprises:
receiving an identifier of a first network sent by the first user equipment, wherein the first user equipment is in the first network; and
if the identifier of the first network is the same as an identifier of the second network, the first request information indicates that the identifier of the first network is the same as the identifier of the second network;
if the identifier of the first network is the same as an identifier of the second network, the first request information further comprises the identifier of the second network; or
if the identifier of the first network is different from an identifier of the second network, the first request information further comprises the identifier of the second network, information about a camped frequency of the second user equipment, and information about a camped cell of the second user equipment.

19. The method according to any one of claims 14 to 18, wherein the first request information further comprises:
a tracking area list of the second user equipment.

20. The method according to claim 19, wherein after the sending first request information to first user equipment, the method further comprises:
receiving information that is sent by the first user equipment and that indicates the second user equipment to update the tracking area list;
updating the tracking area list; and
sending an updated tracking area list to the first user equipment.

21. The method according to any one of claims 14 to 20, wherein the method further comprises:
receiving first response information from the first user equipment, wherein the first response information indicates the first user equipment to accept a request that is sent by the second user equipment and that is used to request the first user equipment to receive the information sent by the second network for paging the second user equipment; and
in response to receiving the first response information from the first user equipment, suspending, by the second user equipment, receiving paging information from the second network.

22. The method according to any one of claims 14 to 20, wherein the method further comprises:
receiving second response information from the first user equipment, wherein the second response information indicates the first user equipment to reject accepting a request that is sent by the second user equipment and that is used to request the first user equipment to receive the information sent by the second network for paging the second user equipment.

23. The method according to claim 22, wherein the method further comprises:
obtaining a location parameter and a motion parameter of the second user equipment;
determining a status of the second user equipment based on the location parameter and the motion parameter; and
if the second user equipment is in a static state, sending third information to the second network, wherein the third information is used by the second network to determine a first communication parameter of the second user equipment; or
if the second user equipment is in a non-static state, sending fourth information to the second network, wherein the fourth information is used by the second network to determine a second communication parameter of the second user equipment, wherein
energy consumption of the second user equipment when the second user equipment communicates with the second network by using the first communication parameter is less than energy consumption of the second user equipment when the second user equipment communicates with the second network by using the second communication parameter.

24. The method according to claim 22, wherein the method further comprises:
obtaining a location parameter and a motion parameter of the second user equipment;
determining a status of the second user equipment based on the location parameter and the motion parameter; and
if the second user equipment is in a static state, sending fifth information to a server, wherein the fifth information is used by the server to determine a first positioning parameter of the second user equipment; or
if the second user equipment is in a non-static state, sending sixth information to a server, wherein the sixth information is used by the server to determine a second positioning parameter of the second user equipment, wherein
energy consumption of the second user equipment when the server positions the second user equipment by using the first positioning parameter is less than energy consumption of the second user equipment when the server positions the second user equipment by using the second positioning parameter.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 24.

26. A chip, comprising a processor, configured to invoke a computer program from a memory and run the computer program, to enable a terminal device on which the chip is installed to perform the method according to any one of claims 1 to 24.

27. A computer program, wherein when the computer program is executed by a communication apparatus, the method according to any one of claims 1 to 24 is implemented.

28. A computer-readable storage medium, wherein:
the computer-readable storage medium stores a computer program; and when the computer program is run, a computer is enabled to perform the method according to any one of claims 1 to 24.
